# EUROPÄISCHE PATENTSCHRIFT

(11) **EP 0 490 022 B1**
(45) Veröffentlichungstag und Bekanntmachung des Hinweises auf die Patenterteilung: **28.05.1997**
(21) Anmeldenummer: 91105430.2
(22) Anmeldetag: 05.04.1991
(51) Int. Cl.: H02G 11/00

(54) **Leitungsführungsanordnung**
Cable guide arrangement
Dispositif de guidage de câbles

(30) Priorität: 13.12.1990 DE 9016870 U
(43) Veröffentlichungstag der Anmeldung: 17.06.1992
(73) Patentinhaber: W.L. Gore & Associates GmbH, 85636 Putzbrunn (DE)
(72) Erfinder: Meier, Karl, W-8548 Heideck (DE)
(74) Vertreter: Klunker . Schmitt-Nilson . Hirsch

(56) Entgegenhaltungen:
- EP-A- 0 289 703
- DE-U- 8 706 822
- GB-A- 937 820
- US-A- 3 630 325

## Beschreibung

Die Erfindung betrifft eine Leitungsführungsanordnung gemäß dem Oberbegriff des Patentanspruchs 1.

Bei Bedarf besteht auch die Möglichkeit, die feststehende Einrichtung mit dem freien Obertrumende und die bewegliche Einrichtung mit dem freien Untertrumende zu verbinden.

Eine Leitungsführungsanordnung dieser Art wird benötigt, wenn zwischen einer feststehenden Einrichtung und einer hin- und herbeweglichen Einrichtung eine Übertragung stattfinden soll, sei es nun eine Übertragung elektrischer und/oder optischer Energie und/oder eine Übertragung von gasförmigen und/oder flüssigen Substanzen. Für eine solche Übertragung müssen die feststehende Einrichtung und die bewegliche Einrichtung im allgemeinen über mehrere Leitungen miteinander verbunden werden, die so geführt werden müssen, daß sie die Relativbewegung zwischen der feststehenden Einrichtung und der beweglichen Einrichtung einerseits ermöglichen und andererseits mitmachen.

Herkömmlicherweise löst man dieses Problem mit einer sogenannten Schleppkettenanordnung oder mit einem als Leitungskanal ausgebildeten Kabelschlepp. Die Schleppkettenanordnung weist zwei oder mehrere Kettenbänder aus Metall oder Kunststoff auf, die in Längsabständen miteinander durch Stege verbunden sind. Diese Stege halten einerseits die zwei oder mehreren Kettenbänder in definiertem Abstand und halten die einzelnen Leitungen in einer der jeweiligen Form der Schleppkette entsprechenden Position. Die Schleppketten können auch durch in Längsrichtung kettengliedartig aneinander gefügte Schlauchelemente gebildet sein, in welche die Leitungen eingefädelt sind.

Beim Verfahren der hin- und herbeweglichen Einrichtung wird das an der beweglichen Einrichtung befestigte Ende der Schleppkette in Schleppkettenlängsrichtung relativ zu dem an der feststehenden Einrichtung befestigten Ende der Schleppkette bewegt. Als Folge davon ändert sich die Position der Schleppkettenschleife in Schleppkettenlängsrichtung und ändern sich die einzelnen Kettenglieder, die an der Schleifenbildung beteiligt sind. Wird eine bestimmte Schleppkettenlänge überschritten, hängt das Kettenobertrum soweit nach unten durch, daß es zu einer Ablage des Kettenobertrums auf dem Kettenuntertrum kommt.

Schleppketten stellen eine aufwendige und entsprechend teure Lösung dar. Die von ihnen geführten Leitungen sind erheblichen mechanischen Beanspruchungen ausgesetzt. Aufgrund der Bewegung der Schleppkette und insbesondere des Wanderns des Ortes der Schleppkettenschleife kommt es zu einer Reibung zwischen den Leitungen und den einzelnen Schleppkettenelementen, insbesondere den die Kettenbänder verbindenden Stegen. Es muß dafür gesorgt werden, daß die einzelnen von der Schleppkette geführten Leitungen alle exakt gleich lang sind, weil sonst einzelne Leitungen der Schleppkette übermäßigen Stauch- oder Streckbelastungen ausgesetzt werden. Die einzelnen Leitungen sind an den beiden Enden der Schleppkette üblicherweise an elektrische Verbinder angeschlossen. Es muß für eine gesonderte Zugentlastung der einzelnen Leitungen gesorgt werden . Kommt es aufgrund der freitragenden Länge der Schleppkette zu einer Ablage des Kettenobertrums auf dem Kettenuntertrum, führt dies zu einer Verschleißbelastung der Schleppkette. Möchte man dies vermeiden, muß man in den Führungskanal eine Zwischendecke in Form eines Gleitblechs einsetzen, das genügend stark sein muß, um das Kettenobertrum tragen zu können. Das Gleitblech kann man aber nicht über den gesamten Verfahrweg der beweglichen Einrichtung erstrecken, weil sonst die Schleppkettenschleife bereits nach kurzem Verfahrweg der beweglichen Einrichtung von dem Gleitblech behindert würde. Wird nach bekannter Art eine gegenläufige Schleppkettenanordnung mit zwei Schleppketten eingesetzt, ist ein solches Gleitblech nicht verwendbar, mit Ausnahme des kurzen Abstands zwischen den feststehenden Enden der beiden gegenläufigen Schleppketten.

Ein als Leitungskanal ausgebildeter Kabelschlepp ist aus der US-A-3 630 325 bekannt. Dieser Leitungskanal weist einen geschlossenen rechteckigen Querschnitt auf. Die Decke dieses Leitungskanals ist in Kanallängsrichtung in periodischen Abständen mit Quertrennungen versehen, die sich in den Seitenwänden des Leitungskanals fortsetzen und bis zum Boden des Leitungskanals reichen. Diese Quertrennungen ermöglichen ein schleifenförmiges Abbiegen des Leitungskanals an der Übergangsstelle zwischen Obertrum und Untertrum. In den Leitungskanal werden lose Leitungen eingelegt, die von einem Längsende des Leitungskanals aus in diesen eingefädelt werden müssen. Dabei ist für jede speziellen Leitungsanordnung ein hinsichtlich Länge und Querschnitt passender Leitungskanal erforderlich.

Der Erfindung liegt die Aufgabe zugrunde, eine Leitungsführungsanordnung verfügbar zu machen, mit der sich die genannten Probleme überwinden lassen.

Die erfindungsgemäße Lösung dieser Aufgabe besteht bei einer Leitungsführungsanordnung der eingangs angegebenen Art darin, an dem Außenumfang des Kabelmantels eine in Leitungslängsrichtung wirksame Gleiteinrichtung guter Gleitfähigkeit anzuordnen, welche eine Reibung zwischen dem Obertrummantel und dem Untertrummantel auch bei großer Leitungslänge verhindert.

Vorteilhafte Weiterbildungen dieser Lösung sind den Unteransprüchen entnehmbar.

Die Gleiteinrichtung kann an den Außenseiten von in Längsrichtung der Leitungsanordnung in Abstand voneinander angeordneten, die Leitungen zusammünenfassenden Leitungsklemmen angeordnet sein.

Die Gleiteinrichtung kann ganz unterschiedlich gestaltet sein. Sie kann beispielsweise durch einen den Kabelmantel vollständig einhüllenden oder ersetzenden biegeelastischen Gleitschlauch aus einem Material guter Gleiteigenschaften gebildet sein, beispielsweise durch einen auf den Kabelmantel aufextrudierten Schlauch aus Kunststoff mit hoher Gleitfähigkeit. Die Gleiteinrichtung kann auch durch Gleitbänder gebildet sein, die auf derjenigen Oberfläche des Kabelmantels angeordnet sind, deren Obertrumteil und deren Untertrumteil sich gegenüberliegen. Desweiteren kann die Gleiteinrichtung durch beidseits der Leitungsklemmen bzw. des Kabelmantels angeordnete Gleitleisten gebildet sein, deren Höhe so gewählt ist, daß sie die Dicke der mit den Leitungsklemmen bzw. dem Kabelmantel umgebenen Leitungsanordnung beidseits überragt. Die Gleiteinrichtung kann auch durch beidseits an die Längsseiten der Leitungsklemmen bzw. des Kabelmantels angesetzte Gleitrinnen gebildet sein, die die Leitungsklemmen bzw. den Kabelmantel nicht nur seitlich sondern in seinem Seitenbereich auch unten und oben mit Material guter Gleitfähigkeit abdecken.

Diese Gleiteinrichtungen können auf verschiedene Weise an den Leitungsklemmen bzw. an Kabelmantel befestigt sein, beispielsweise durch Ankleben, Anschweißen, beispielsweise mittels Ultraschall, Extrudieren von an den Gleiteinrichtungen angeordneten Verankerungseinrichtungen in den Kabelmantel, Annieten, Annageln, formschlüssig ineinandergreifende Verbindungselemente an dem Kabelmantel einerseits und der Gleiteinrichtung andererseits, usw.

Die Gleiteinrichtung besteht aus einem biegeelastischen Material wie Stahl oder gleitfähigem Kunststoff wie Polyurethan, Polyamid (Nylon), Polytetrafluorethylen, auch PTFE genannt (Teflon). Vorzugsweise ist das Material der Gleiteinrichtung steifer als das Material des Kabelmantels. Die Gleiteinrichtung bildet dann nicht nur einen mechanischen Gleitschutz für den Kabelmantel sondern sie kann die bei der Hin- und Herbewegung der beweglichen Einrichtung ausgeübten Zug- und Schubkräfte von der Leitungsanordnung fernhalten. Befestigt man die Längsenden der Gleiteinrichtung in bevorzugter Weise an der feststehenden bzw. der beweglichen Einrichtung, ist damit gleichzeitig eine Zugentlastung für die Leitungsanordnung gegeben.

Weist eine Gleiteinrichtung aus einem Material, das deutlich steifer ist als das Kabelmantelmaterial, sich vertikal erstreckende Bereiche auf, ist eine sich in Längsrichtung der Gleiteinrichtung wiederholende, vertikal verlaufende Kerbung mit zur Oberseite des Untertrums bzw. zur Unterseite des Obertrums offenen Spalte, z.B. Keilspalten erforderlich, um das Biegen im Bereich der Schleife zwischen Untertrum und Obertrum zu ermöglichen. Weist die Gleiteinrichtung zusätzlich zu dem vertikalen Bereich auf der Oberseite des Untertrums bzw. der Unterseite des Obertrums einen horizontalen Bereich auf, setzen sich die Spalte durch diesen horizontalen Bereich hindurch fort.

Die Gleiteinrichtung kann auch eine Vielzahl über die Länge der Leitungsanordnung verteilte, beidseits seitlich von der Leitungsanordnung abstehende Gleitelemente aufweisen, die in beidseits der Leitungsanordnung angeordneten Führungskanälen geführt werden. Zu diesem Zweck ist beidseits der Leitungsanordnung je ein Paar paralleler, übereinander verlaufender Führungskanäle vorgesehen, in denen die Gleitelemente geführt werden. Die beiden Führungselemente eines jeden Führungskanalpaares sind mit je einem Bogenkanalstück miteinander verbunden, in dem die Gleitelemente des Leitungskabels geführt werden, die sich im Bereich des jeweils die Schleife bildenden Teils des Leitungsanordnung befinden. Da sich der Ort der Schleife des Leitungsanordnung mit dem Verfahren der beweglichen Einrichtung ändert, muß der Ort der Bogenkanalstücke entsprechend verschiebbar sein. Ist das Bogenkanalstück fest mit dem zugehörigen Führungskanalpaar verbunden, wird dies durch gemeinsame Verschiebbarkeit des Führungskanalpaares und des zugehörigen Bogenkanalstückes in Verfahrrichtung der beweglichen Einrichtung erreicht. Sollen die Führungskanäle unbeweglich gehalten werden, kann die Mitbewegung der Bogenkanalstücke mit dem Wandern der Leitungsanordnungsschleife längs des Verfahrweges dadurch erreicht werden, daß die Bogenkanalstücke auf in den Führungskanälen verschiebbar gehaltenen Gleitklötzen befestigt sind. Die Bogenkanalstücke befinden sich dann außerhalb der Führungskanäle, um relativ zu diesen verschoben werden zu können. Zu diesem Zweck sind die Gleitklötze mit einer Rampe versehen, über welche die an den Leitungsklemmen bzw. am Kabelmantel angeordneten Gleitelemente von den Führungskanälen in die Bogenkanalstücke oder umgkehrt überführt werden können. Um dieses Überführen zu ermöglichen, sind bei dieser Ausführungsform der Erfindung die an den Leitungsklemmen bzw. dem Kabelmantel angeordneten Gleitelemente je gegen die Kraft einer Druckfeder in Querrichtung zur Verfahrrichtung der beweglichen Einrichtung soweit eindrückbar, daß die Rampenhöhe der Gleitklötze ausgeglichen werden kann.

Die Leitungen sind bevorzugtermaßen Teil eines Bandkabels. Sie können aber auch Rundkabel oder Einzelleiter sein.

Eine mit der erfindungsgemäßen Gleiteinrichtung versehene Leitungsanordnung wirkt als selbsttragende, selbstschleppende Leitungsanordnung. Es bedarf keiner zusätzlichen Schleppketten oder Schleppschläuche. Bei Verwendung von Gleitbändern, Gleitschienen, Gleitleisten, Gleitrinnen und dergl. kann sich das Obertrum problemlos auf dem Untertrum ablegen, weil der Leitungsanordnungsteil des Obertrums nicht mit dem Leitungsanordnungsteil des Untertrums in Berührung kommt sondern nur die zum Obertrum und die zum Untertrum gehörenden Bereiche der Gleiteinrichtung aufeinander gleiten.

Würde man ein Kabel ohne die erfindungsgemäße Gleiteinrichtung als selbsttragendes, selbstschleppendes Kabel verwenden, bei welchem sich das Obertrum auf dem Untertrum ablegt und damit der Mantelbereich des Obertrums auf dem Mantelbereich des Untertrums gleiten müßte, käme es aufgrund der schlechten Gleiteigenschaften der für Kabelmäntel üblicherweise verwendeten Materialien zu einer sehr starken Reibung zwischen diesen beiden Kabelmantelbereichen. Diese starke Reibung verhinderte im wesentlichen eine Gleitbewegung des Obertrums auf dem Untertrum. Das Obertrum würde dann aufgrund der Schubwirkung der beweglichen Einrichtung unter Bildung einer unbeabsichtigten weiteren, S-förmigen Schleife über das Untertrum gebracht. Dies führte schließlich zum Brechen des Kabels. Außerdem würde dies zu einem schnellen Verschleiß des Kabelmantels führen. Des weiteren müßten hohe Zug- und Schubkräfte auf das Kabel ausgeübt werden, um bei der Bewegung des Kabels zusammen mit der beweglichen Einrichtung die hohe Kabelreibung zu überwinden.

Erfindungsgemäß dagegen wird die Reibung ausschließlich in die Gleiteinrichtung verlagert, deren Material unabhängig von den für Kabel dienenden Gesichtspunkten nur nach den Gesichtspunkten einer geringen Reibung ausgewählt werden kann. Hohe auf das Kabel einwirkende Druck- und Zugkräfte werden dadurch vermieden. Außerdem werden solche Druck- und Zugkräfte von der Gleiteinrichtung aufgefangen. Die Leitungsanordnung braucht daher nicht für hohe mechanische Belastungen ausgelegt zu sein, was sich hinsichtlich der Kosten sehr günstig auswirkt.

Erfindungsgemäße Gleiteinrichtungen können auch wesentlich billiger sein als herkömmliche Kabelschleppketten.

Da bei der erfindungsgemäßen Lösung keine Gleitbleche wie bei der bekannten Schleppkettenlösung benötigt werden, kann die Leitungsanordnungsbewegung unabhängig von deren Länge und unabhängig von den möglichen relativen Positionen zwischen feststehender Einrichtung und beweglicher Einrichtung ungehindert erfolgen, auch bei gegenläufig bewegten Leitungsanordnungen.

Auch bei der erfindungsgemäßen Ausführungsform mit in Führungskanälen geführten Gleitelementen ist die Leitungsanordnung gänzlich von irgendwelchen Reibungskräften zwischen ihrem Obertrum- und Untertrumbereichen entlastet.

Man kann auch mehrere je mit einer Gleiteinrichtung versehene Leitungsanordnungen zu einer gemeinsamen Gruppeneinheit zusammenfassen, indem man die Gleiteinrichtungen der einzelnen Leitungsanordnungen miteinander verbindet. Dies gilt sowohl für eine Lösung, bei welcher beispielsweise Bandkabel nur mit einer sie teilweise abdeckenden Gleiteinrichtung, beispielsweise seitlichen Gleitrinnen, versehen sind, als auch für Leitungsanordnungen, die je in einem Gleitschlauch untergebracht sind. Das Verbinden der Gleiteinrichtungen der einzelnen Leitungsanordnungen miteinander kann durch Verschweißen, Verklammern, Verkleben usw. bewerkstelligt werden.

Die bewegliche Einrichtung des Systems, beispielsweise ein hin- und herverfahrbarer Roboter weist häufig einen Leitungsanschlußbereich auf, der um eine beträchtliche Höhe über dem oberen Kabeltrum liegt, wenn dieses auf das untere Kabeltrum abgelegt ist. Bei genügendem Abstand der beweglichen Einrichtung von dem jeweiligen Ort der Leitungsanordnungsschleife kommt es daher in dem vor der beweglichen Einrichtung liegenden Bereich der Leitungsanordnung zu einem S-förmig verlaufenden Teil der Leitungsanordnung. Hier kommt es bei der Bewegung der beweglichen Einrichtung zu starken mechanischen Belastungen der Leitungsanordnung.

Bei einer besonders bevorzugten Ausführungsform der Erfindung wird dies dadurch vermieden, daß die bewegliche Einrichtung mit einem Abstandshalter versehen wird, der das mit der beweglichen Einrichtung mit zu bewegende Ende der Leitungsanordnung so tief hält, daß in diesem Bereich das Obertrum immer in Berührung mit dem Untertrum oder nur dicht über dem Untertrum geführt wird.

Im Bereich ihres feststehenden Endes wird die Leitungsanordnung vorteilhafterweise in einer aus der Gleiteinrichtung herausstehenden Ausgleichsschleife gehalten, die beiden Endes mittels je einer Leitungsklemme festgeklemmt ist. Dabei ist die am gleiteinrichtungsseitigen Ende der Ausgleichsschleife montierte Leitungsklemme in Kabellängsrichtung relativ zu der Gleiteinrichtung beweglich, vorzugsweise federnd.

Die Erfindung wird nun anhand von Ausführungsformen näher erläutert. In den Zeichnungen zeigen:
- Fig. 1: eine erste Ausführungsform eines Bandkabels mit einer Gleiteinrichtung in Form von Gleitbändern auf der zwischen Obertrum und Untertrum befindlichen Oberfläche des Bandkabels;
- Fig. 2: eine Teilschnitt-Darstellung der in Fig. 1 gezeigten Ausführungsform im Zusammenwirken mit einem Leitungsführungskanal;
- Fig. 3: eine Ausführungsform mit randseitig angeordneten Gleitbändern;
- Fig. 4: eine Ausführungsform mit einem mittig angeordneten Gleitband;
- Fig. 5: eine Ausführungsform mit einer schlauchförmigen Gleiteinrichtung;
- Fig. 6: eine Ausführungsform mit seitlich angesetzten Gleitrinnen;
- Fig. 7: eine Ausführungsform mit im Kabelmantel verankerten, seitlichen Gleitleisten;
- Fig. 8: eine Ausführungsform mit im Kabelmantel verankerten Gleitbändern;
- Fig. 9: eine andere Ausführungsform mit im Kabelmantel verankerten Gleitbändern;
- Fig. 10: eine Teilschnittansicht einer Ausführungsform mit im Kabelmantel verankerter Gleitrinne;
- Fig. 11: eine Seitenansicht der in Fig. 10 gezeigten Ausführungsform mit Darstellung von Keilspalten;
- Fig. 12: eine perspektivische Ausschnittsdarstellung der in Fig. 6 gezeigten Ausführungsform mit Keilspalten;
- Fig. 13: eine Ausführungsform mit Gleitbändern, die mit einer feststehenden oder einer beweglichen Einrichtung verbindbar sind;
- Fig. 14 bis 22: verschiedene Beispiele für die Befestigung seitlicher Gleitrinnen an einem Bandkabel;
- Fig. 23: eine Ausführungsform eines Bandkabels mit seitlich abstehenden Gleitelementen;
- Fig. 24: eine Ausführungsform eines Führungskanals für die Gleitelemente des Bandkabels in Fig. 23;
- Fig. 25: eine schematische Darstellung eines gegen Federkraft eindrückbaren Gleitelements;
- Fig. 26: eine perspektivische Darstellung einer Gruppeneinheit mit zwei zusammengefaßten Leitungsanordnungen;
- Fig. 27: eine Draufsicht auf ein Längsende der in Fig. 26 gezeigten Gruppeneinheit;
- Fig. 28 und 29: Darstellungen zur Erläuterung der mechanischen Beanspruchungen, die infolge der Hin- und Herbewegung der beweglichen Einrichtung auf die Leitungsanordnung ausgeübt werden;
- Fig. 30: eine schematische Darstellung mit einer Zugentlastungseinrichtung auf der Seite der beweglichen Einrichtung;
- Fig. 31: eine schematische Daratellung einer Ausgleichseinrichtung auf der feststehenden Seite der Leitungsanordnung;
- Fig. 32: eine perspektivische Darstellung einer bewegungsseitigen Zugentlastung der Leitungsanordnung; und
- Fig. 33: eine Zugentlastungseinrichtung am feststehenden Ende der Leitungsanordnung.

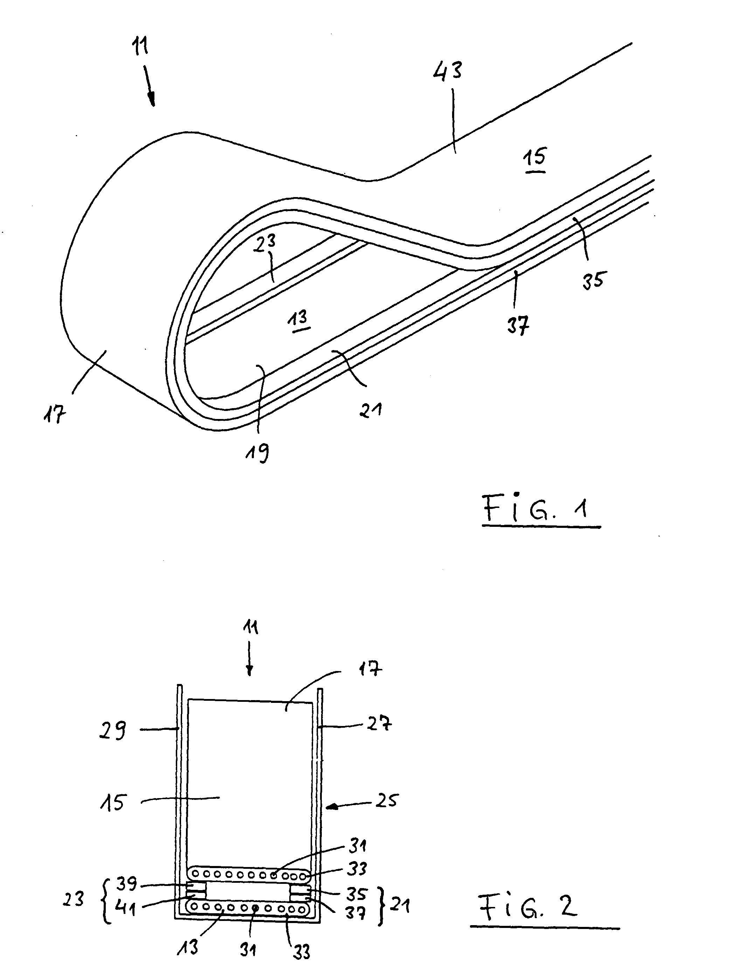

Fig. 1 zeigt in schematischer Teilansicht ein Bandkabel mit einem Untertrum 13 und einem darauf abgelegten Obertrum 15, die über eine Schleife 17 miteinander verbunden sind. Auf den beiden Rändern derjenigen Oberfläche des Bandkabels 11, mit welcher sich Untertrum 13 und Obertrum 15 gegenüber liegen und die im folgenden "Innenoberfläche" 19 genannt wird, ist je ein Gleitband 21 bzw. 23 angeordnet. Dieses kann aus einem Stahlband oder einem Kunststoff guter Gleitfähigkeit bestehen. Hierfür geeignet sind beispielsweise die bereits genannten Kunststoffe.

Fig. 2 zeigt das in Fig. 1 dargestellte Bandkabel 11 in einem Leitungsführungskanal 25 in Form einer oben offenen Rinne, die beispielsweise aus Aluminium oder Blech besteht. Der Leitungsführungskanal hat eine etwas größere Breite als das Bandkabel 11. Bei der in Fig. 2 gezeigten Ausführungsform ist die Höhe des Leitungsführungskanals 25 ist so gewählt, daß Seitenwände 27 und 29 des Leitungsführungskanals 25 die höchste Stelle der Schleife 17 etwas überragen. Die Seitenwände 27 und 29 brauchen lediglich das Bandkabel 11 und dessen Schleife 17 seitlich zu führen. Es ist daher auch eine geringere Seitenwandhöhe als in Fig. 2 möglich.
Das Bandkabel 11 weist eine Anzahl nebeneinander aufgereihter elektrischer Leitungen 31 auf, die von einem extrudierten Kabelmantel 33 aus Kunststoff umgeben sind. Fig. 2 zeigt auch, daß außerhalb des Bereichs der Schleife 17 ein Obertrumbereich 35 des in Fig. 2 rechten Gleitbands 21 auf einem Untertrumbereich 37 dieses Gleitbands liegt, während ein Obertrumbereich 39 des in Fig. 2 linken Gleitbands 23 auf einem Untertrumbereich 41 dieses Gleitbands 23 liegt. Dies ist für das Gleitband 21 auch in Fig. 1 zu sehen.

Wird eine (in den Figuren nicht gezeigte) bewegliche Einrichtung, mit welcher ein freies Ende des Obertrums 15 verbunden ist, in Längsrichtung des Bandkabels 11 verfahren, gleiten die Obertrumbereiche 35 und 39 der beiden Gleitbänder 21 und 23 auf den zugehörigen Untertrumbereichen 37 bzw. 41. Der Ort, an welchem sich die Schleife 17 bildet, verschiebt sich entsprechend der Verfahrbewegung der beweglichen Einrichtung.

Bei dieser Verfahrbewegung kommt es nirgends zu einer Gleitbewegung eines Oberflächenbereichs des Bandkabels 11 auf einem anderen Oberflächenbereich dieses Bandkabels 11 oder auf einer anderen Oberfläche. Die Innenoberfläche 19 wird mittels der Gleitbänder 21 und 23 im Abstand voneinander gehalten. Die andere Oberfläche des Bandkabels, im folgenden "Außenoberfläche" genannt, rollt im Bereich der Schleife 17 lediglich auf dem Boden des Leitungsführungskanals ab, ohne jedoch auf diesem zu gleiten. Sämtliche Gleitbewegungen werden von den beiden Gleitbändern 21 und 23 übernommen.

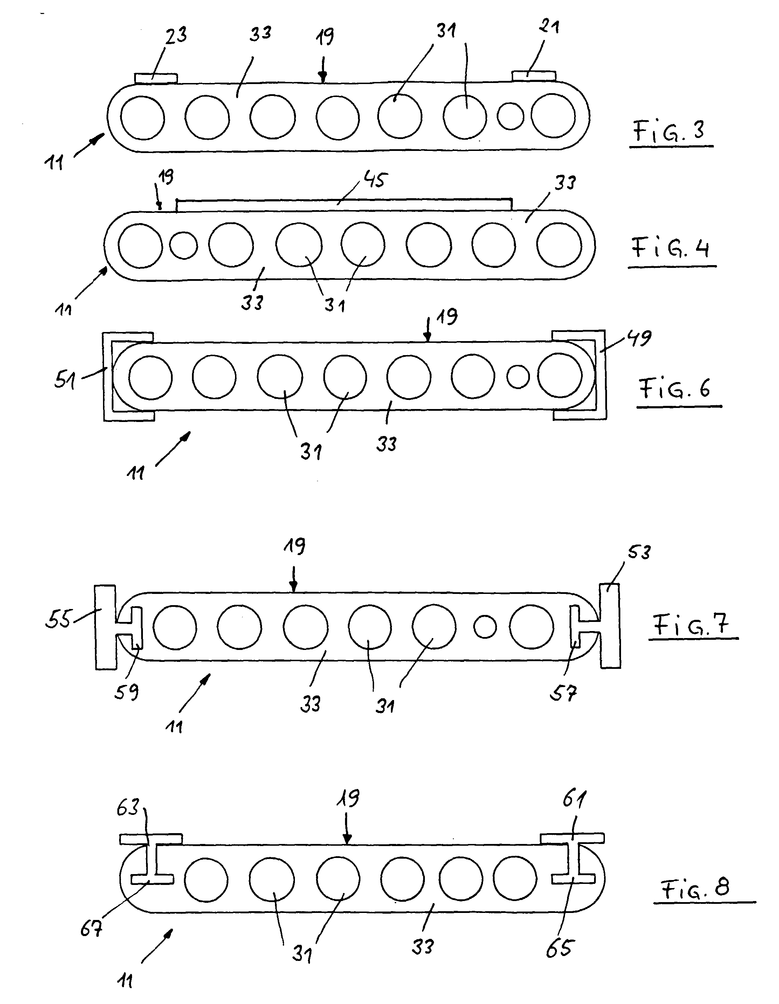

Anhand der Fig. 3 bis 10 werden nun verschiedene Ausführungsformen von Bandkabeln 11 mit verschiedenen Gleiteinrichtungen dargestellt.

Fig. 3 zeigt in vergrößerter Darstellung einen Querschnitt der in den Fig. 1 und 2 gezeigten Ausführungsform mit zwei Gleitbändern 21 und 23, die je an einem Rand des Bandkabels 11 auf der Innenoberfläche 19 angeordnet sind. Die beiden Gleitbänder 21 und 23 können Stahlfederbänder sein oder biegeelastische Kunststoffbänder. Sie können beispielsweise durch Kleben ober Ultraschallschweißen an dem Kabelmantel befestigt sein.

Fig. 4 zeigt eine Ausführungsform, bei welcher anstelle der beiden seitlich angeordneten Gleitbänder 21 und 23 in Fig. 3 ein einziges, mittig angeordnetes Gleitband 45 vorgesehen ist.

Fig. 5 zeigt eine Ausführungsform, bei welcher der Kabelmantel 33 des Bandkabels 11 vollständig von einem Gleitschlauch 47 eingehüllt ist. Der Gleitschlauch 47 besteht entweder aus einem Material, das genügend biegeelastisch ist, um die Biegung des Bandkabels 11 im Bereich der Schleife 17 mitmachen zu können, oder der Gleitschlauch 47 weist auf seiner in Fig. 5 unten befindlichen Außenoberfläche eine Vielzahl in Kabellängsrichtung voneinander beabstandeter Querkerben oder Querspalte auf, die sich um die beiden runden Längsseitenkanten des Flachkabels 11 herum bis zum Übergang der Flachkabellängsseiten in die in Fig. 5 oben befindliche Innenoberfläche des Gleitschlauches 47 fortsetzen und im Bereich der Längsseitenkanten Keilform aufweisen. Der Gleitschlauch 47 kann auch anstelle des Kabelmantels 33 verwendet werden. Er kann zusammen mit dem Kabelmantel 33 oder an dessen Stelle extrudiert werden.

Fig. 6 zeigt eine Ausführungsform, bei welcher die Gleiteinrichtung durch zwei Gleitrinnen 49 und 51 gebildet ist, die auf je eine Längsseitenkante des Bandkabels 11 aufgeschoben sind. Die Gleitrinnen 49 und 51 haben den Vorteil, daß sie für eine geringe Reibung nicht nur zwischen Obertrum 15 und Untertrum 13 des Bandkabels 11 sondern auch zwischen den beiden Längsseitenrändern des Bandkabels 11 und den Seitenwänden 27 und 29 des Leitungsführungskanals 25 sorgen.

Fig. 7 zeigt eine Ausführungsform, bei welcher die Gleiteinrichtung zwei Gleitleisten 53 und 55 aufweist, die je seitlich einer der beiden Längsseitenkanten des Bandkabels 11 angeordnet sind und im Querschnitt eine Höhe aufweisen, die größer ist als die Dicke des Bandkabels 11. Dadurch sorgen die beiden Gleitleisten 53 und 55 ebenfalls für ein gutes Gleiten sowohl zwischen Obertrum 15 und Untertrum 13 des Bandkabels 11 als auch zwischen dem Bandkabel 11 und den beiden Seitenwänden 27 und 29 des Leitungsführungskanals 25.

Die Gleitleisten 53 und 55 weisen je eine T-förmige Verankerungseinrichtung 57 und 59 auf, die mit der zugehörigen Gleitleiste 53 bzw. 55 einstückig ausgebildet und durch Einextrudieren in den Kabelmantel 33 in diesem verankert ist.

Fig. 8 zeigt eine Ausführungsform mit Gleitbändern 61 und 63, die ähnlich den Gleitbänder 21 und 23 in Fig. 3 auf je einem Randbereich der Innenoberfläche 19 des Bandkabels 11 angeordnet sind, jedoch T-förmige Verankerungseinrichtungen 65 und 67 ähnlich wie die Gleitleisten 53 und 55 aufweisen, mit denen sie im extrudierten Kabelmantel 33 verankert sind.

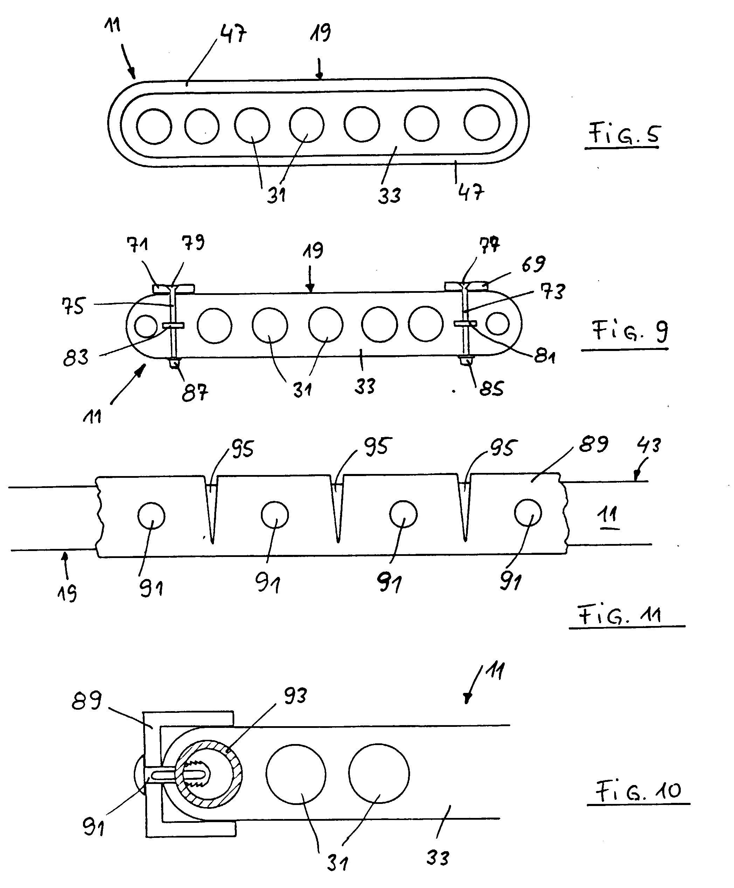

Fig. 9 zeigt eine Ausführungsform mit zwei Gleitleisten 69 und 71, die an gleicher Stelle wie die Gleitleisten 21 und 23 in Fig. 3 positioniert sind, jedoch mit Ankereinrichtungen in Form von Ankerbolzen 73 bzw. 75 versehen sind. Bolzenköpfe 77 und 79 der Ankerbolzen 73 und 75 sind in den Gleitleisten 69 bzw. 71 versenkt gehalten. Die Ankerbolzen 73 und 75 sind durch den Kabelmantel 33 und im Kabelmantel angeordnete Ankerplatten 81 bzw. 83 hindurch geführt und mittels Ankermuttern 85 bzw. 87 festgeschraubt.

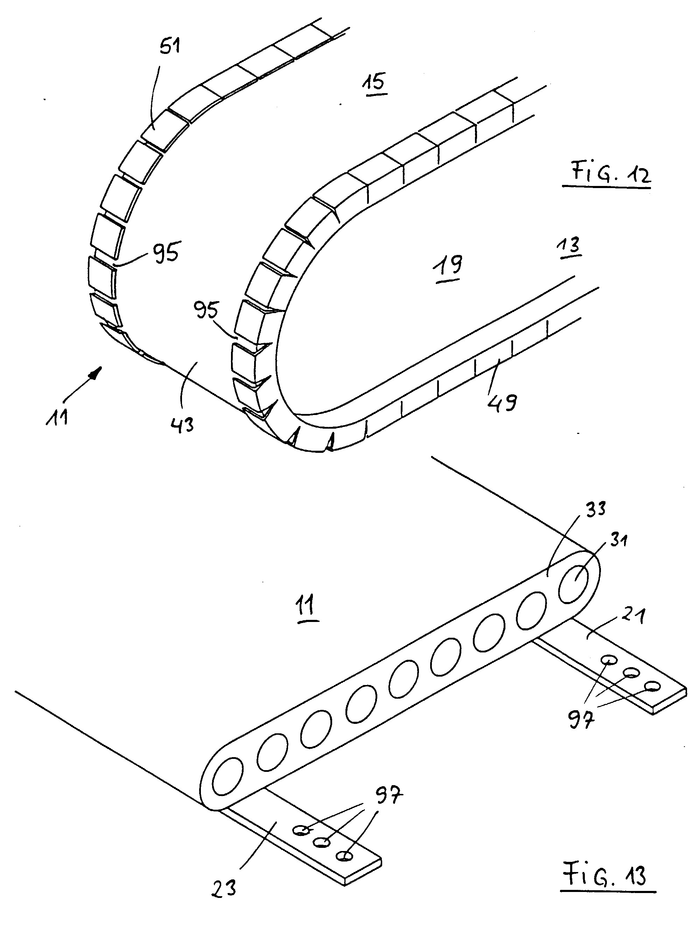

Fig. 10 zeigt eine Gleitrinne 89, die den Gleitrinnen 49 und 51 in Fig. 6 ähnlich ist. Die Gleitrinne 89 ist jedoch mit Hilfe eines Ankerdübels 91 in einem Ankerrohr 93 verankert, das parallel zu den elektrischen Leitungen 31 verläuft und im Kabelmantel 33 des Bandkabels 11 eingebettet ist.

Fig. 11 zeigt eine Seitenansicht eines Bandkabels 11 mit der in Fig. 10 gezeigten Gleitrinne 89. Diese Seitenansicht zeigt in Längsrichtung des Bandkabels 11 im periodischen Abstand voneinander angeordnete Keilspalte 95, die von der in Fig. 11 oben befindlichen Außenoberfläche der Gleitrinne 89 mit sich verjüngender Keilform bis in die Nähe der in Fig. 11 unten befindlichen Innenoberfläche der Gleitrinne 89 verlaufen. Die Keilspalten 95 setzen sich in dem in Fig. 10 oberen horizontalen Bereich der Gleitrinne 89 fort. Zwischen den einzelnen Keilspalten 95 sieht man in Fig. 11 je einen Ankerdübel 91 der in Fig. 10 gezeigten Art.

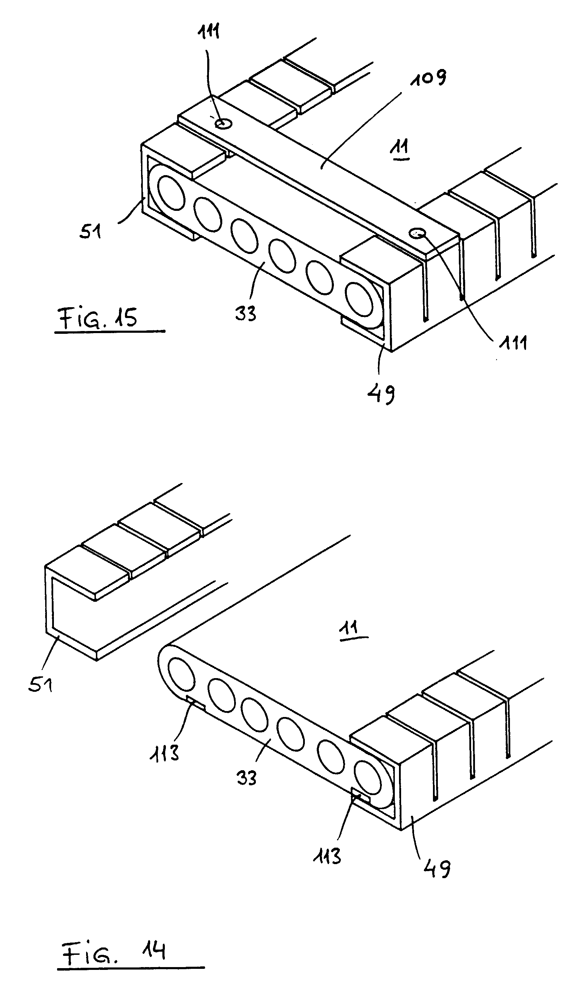

Fig. 12 zeigt eine perspektivische Teilansicht eines Bandkabels 11, das an beiden Längsseitenkanten mit je einer Gleitrinne 49 bzw. 51 gemäß Fig. 6 versehen ist. Die beiden Gleitrinnen 49 und 51 sind in der in Fig. 11 gezeigten Art mit Keilspalten 95 versehen, wobei in Fig. 12 deutlich zu sehen ist, wie sich die Keilspalten in den auf der Außenoberfläche 43 des Bandkabels 11 aufliegenden Horizontalbereichen der beiden Gleitrinnen 51 und 49 fortsetzen.

Fig. 13 zeigt eine Ausführungsform mit zwei Gleitbändern 21 und 23, die sich über das freie Ende des Bandkabels 11 hinauserstrecken und mit Montagelöchern 97 versehen sind, mittels welchen sie mit der feststehenden Einrichtung bzw. der beweglichen Einrichtung (in den Fig. nicht gezeigt) verbunden werden können. Dies führt einerseits zur Zugentlastung der elektrischen Leitungen 31 des Bandkabels 11 und entlastet andererseits das Bandkabel 11 gänzlich von Zug- und Schubkräften, welche durch das Verfahren der beweglichen Einrichtung auf die Anordnung aus Bandkabel und Gleiteinrichtung ausgeübt werden.

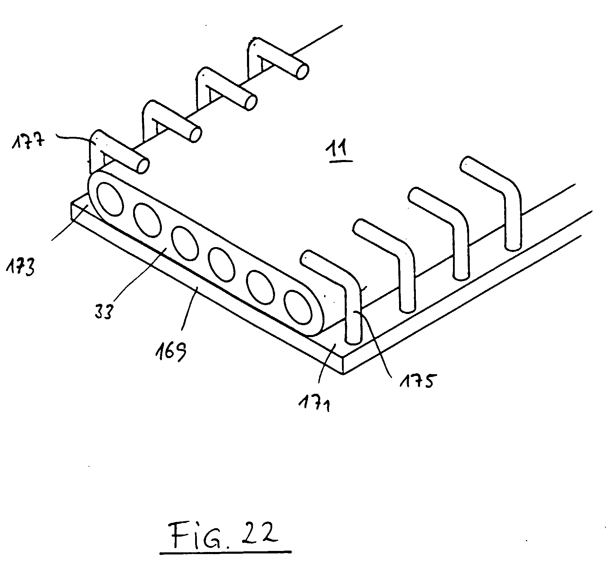

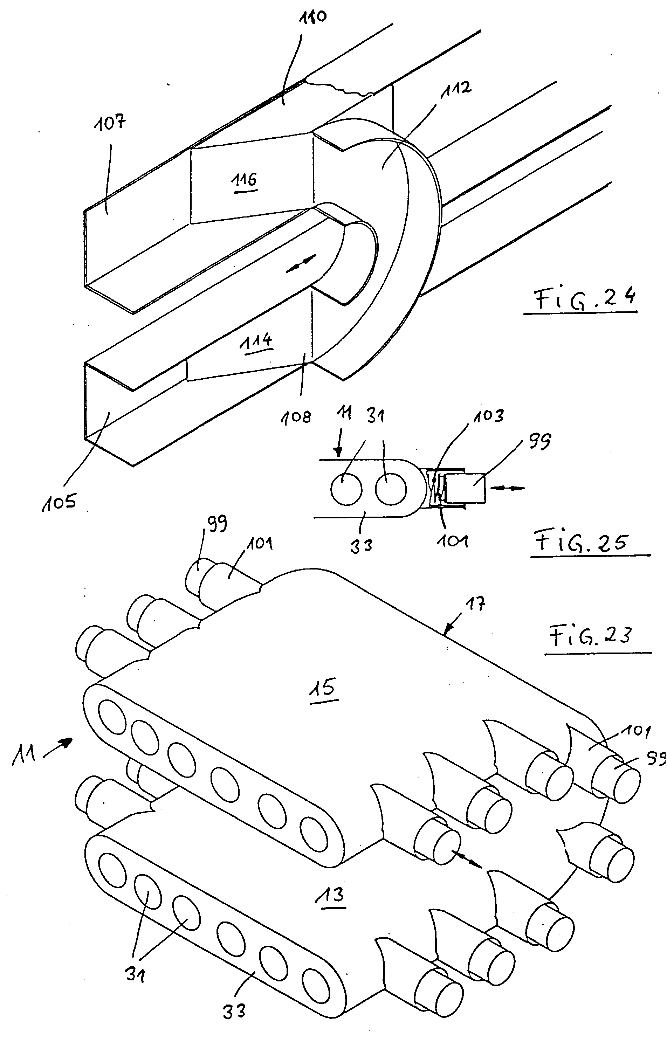

In den Fig. 14 bis 22 sind verschiedene Möglichkeiten für die Befestigung von Gleiteinrichtungen an einem Bandkabel gezeigt. Bei den Ausführungsformen gemäß Fig. 14 bis 21 handelt es sich um Gleitrinnen, die seitlich an das Bandkabel angesetzt sind. Fig. 22 zeigt eine Ausführungsform, bei welcher ein Gleitband an einer Flachseite des Bandkabels angeordnet ist.

Fig. 14 zeigt eine Ausführungsform, bei welcher in die in dieser Figur untere Flachseite des Bandkabels 11 zwei parallele Tragstreifen 113 eingelassen sind. Diese bestehen aus dem gleichen Material wie die Gleitrinnen 51 und 49, so daß sie mit den Gleitrinnen 49 und 51 gut verschweißt werden können, beispielsweise mittels Ultraschallverschweißung.

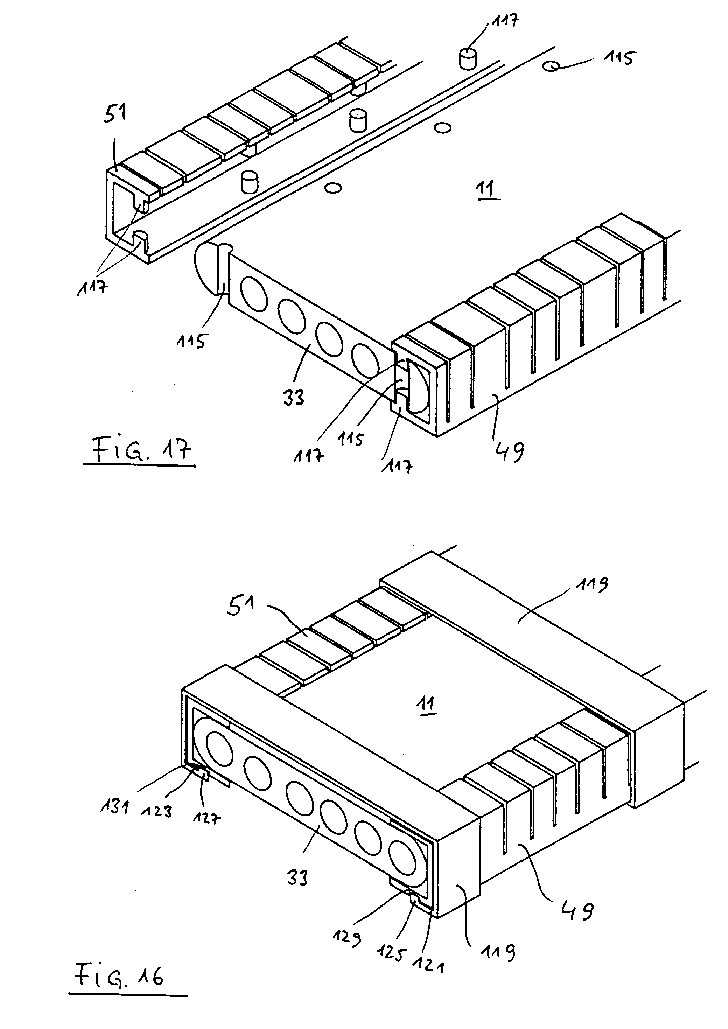

Bei der in Fig. 15 gezeigten Ausführungsform sind zwei Gleitrinnen 51 und 49, die je einen Längsseitenrand des Bandkabels 11 aufnehmen, mit einer Vielzahl von in Kabellängsrichtung im Abstand voneinander angeordneten Verbindungslaschen 109 zusammengehalten. In Fig. 15 ist nur eine solche Verbindungslasche 109 gezeigt. Die Befestigung der Verbindungslaschen 109 an den Gleitrinnen 49 und 51 kann beispielsweise mittels Ultraschallverschweißens an Schweißstellen 111 geschehen.

Bei der in Fig. 16 dargestellten Ausführungsform werden die beiden Gleitrinnen 49 und 51 mit einer Anzahl von in Leitungslängsrichtung im Abstand voneinander angeordneten Klammern 119 festgehalten. Die Klammern 119 überbrücken die Gleitrinnen 49, 51 auf der in Fig. 16 oberen Seite vollständig und weisen auf der in Fig. 16 unteren Flachseite des Bandkabels 11 auf beiden Seiten je nur einen kurzen Rastarm 121 bzw. 123 auf. Die freien Enden der Rastarme 121, 123 sind mit zum Bandkabel 11 hin vorstehenden Rastrippen 125, 127 versehen, die in komplementäre Ausnehmungen 129 bzw. 131 auf der in Fig. 16 unteren Seite der Gleitrinnen 49 bzw. 51 verrastend eingreifen.

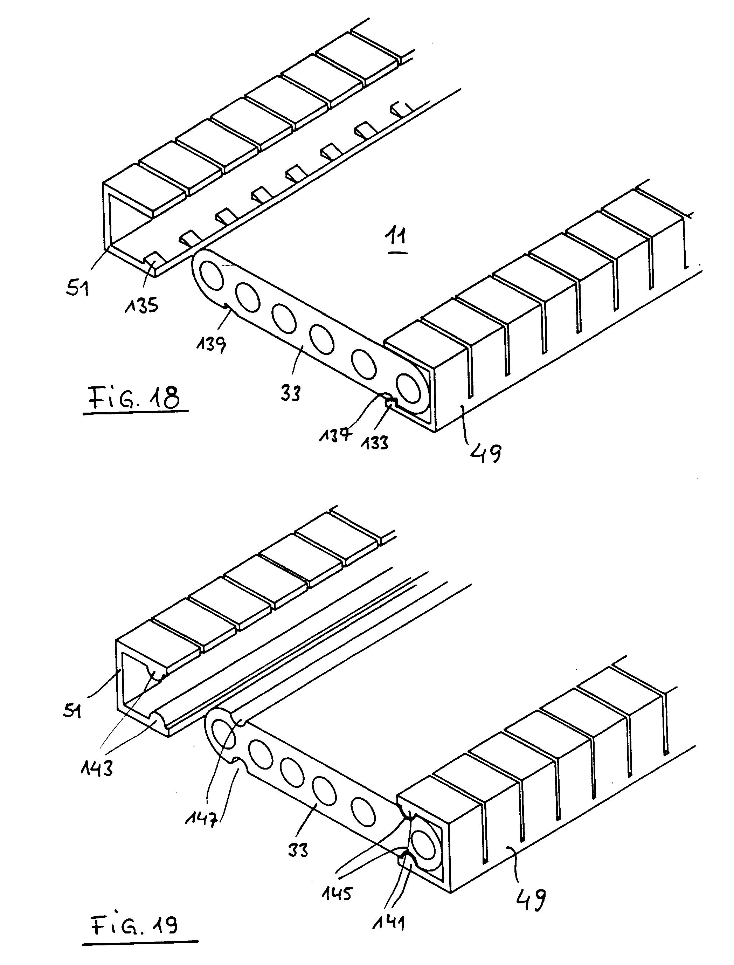

Fig. 17 zeigt eine Ausführungsform für eine formschlüssige Verbindung zwischen dem Bandkabel 11 und den Gleitrinnen 49 und 51. Bei dieser Ausführungsform ist entlang der Längsseitenrändern des Bandkabels 11 je eine Reihe von voneinander beabstandeten Löchern 115 vorgesehen. Die Gleitrinnen 49 und 51 sind an entsprechenden Stellen mit aufeinanderzu gerichteten Zapfen 117 versehen. Zur Montage werden die Gleitrinnen 49, 51 über die Seitenränder des Bandkabels 111 soweit aufgeschoben, bis die Zapfen 117 in das je zugehörige der Löscher 115 einrasten.

Bei der in Fig. 18 gezeigten Ausführungsform sind die in dieser Figur unteren freien Enden der C-förmigen Gleitrinnen 49, 51 mit zahnartigen Rastvorsprüngen 133, 135 versehen, die in entsprechend positionierte, komplementär ausgebildete Rastausnehmungen 137 bzw. 139 an der in Fig. 18 unteren Flachseite des Kabels 11 einrasten können.

Bei der in Fig. 19 dargestellten Ausführungsform ragen von den Innenseiten der Schenkel der Gleitrinnen 49, 51 Rastwülste 141 bzw. 143 vor, die in entsprechend positionierte und geformte Rastnuten 145 bzw. 147 in den Längsrandbereichen der beiden Flachseiten des Bandkabels 11 eingreifen.

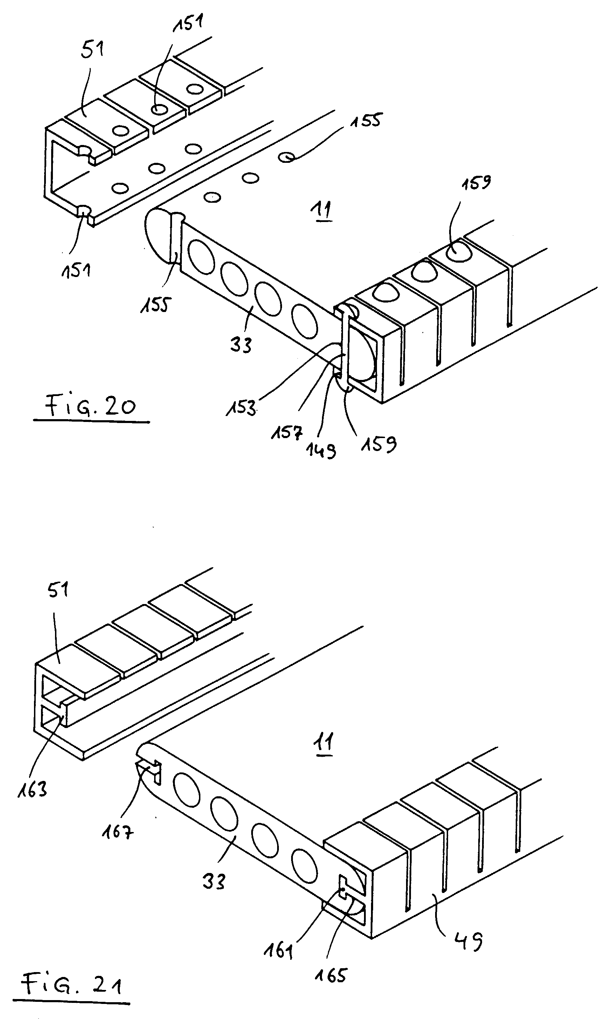

Bei der in Fig. 20 gezeigten Ausführungsform sind die Schenkel der Gleitrinnen 49, 51 mit je einer in Längsrichtung verlaufenden Reihe von Rastlöchern 149 bzw. 151 versehen. Das Bandkabel 11 ist in seinen beiden Randbereichen mit je zugehörenden Durchführöffnungen 153 bzw. 155 versehen. Bei an das Bandkabel 11 angesetzten Gleitrinnen 49, 51 fluchten die Rastlöcher 149, 151 mit den Durchführöffnungen 153, 155, so daß Verriegelungsstifte 157 durch die fluchtenden Rastlöcher und Durchführöffnungen hindurchgesteckt werden können, die mittels beiden Endes angeordneten nietartigen Köpfen 159 festgelegt sind. Dabei werden die nietartigen Köpfe 159 am einen Ende der Verriegelungsstifte 157 erst nach deren Durchstecken durch die Rastlöcher 149, 151 und die Durchführöffnungen 153, 155 geformt.

Bei der in Fig. 21 dargestellten Ausführungsform stehen von den vertikalen Innenwänden der Gleitrinnen 49 und 51 T-förmige Rastrippen 161, 163 vor, die in entsprechend T-förmig geformte Rastnuten 165, 167 in den Längsseitenrändern des Kabelmantels 33 einschiebbar sind.

Bei der in Fig. 22 gezeigten Ausführungsform ist als Gleiteinrichtung ein Gleitband 169 vorgesehen, das beidseits über die Längsseitenränder des Bandkabels 11 übersteht. In den beiden seitlichen Überständen 171, 173 des Gleitbandes 169 sind Haltestifte 175 bzw. 177 befestigt, die auf die von dem Gleitband 169 abgelegene Flachseite des Bandkabels 11 unter Abwinkelung herabgebogen sind. Auf diese Weise wird das Bandkabel 11 mit dem Gleitband 169 zusammengehalten.

Bei den vorausgehend betrachteten Ausführungsformen ist somit jeweils am Bandkabel 11 selbst eine Gleiteinrichtung befestigt.

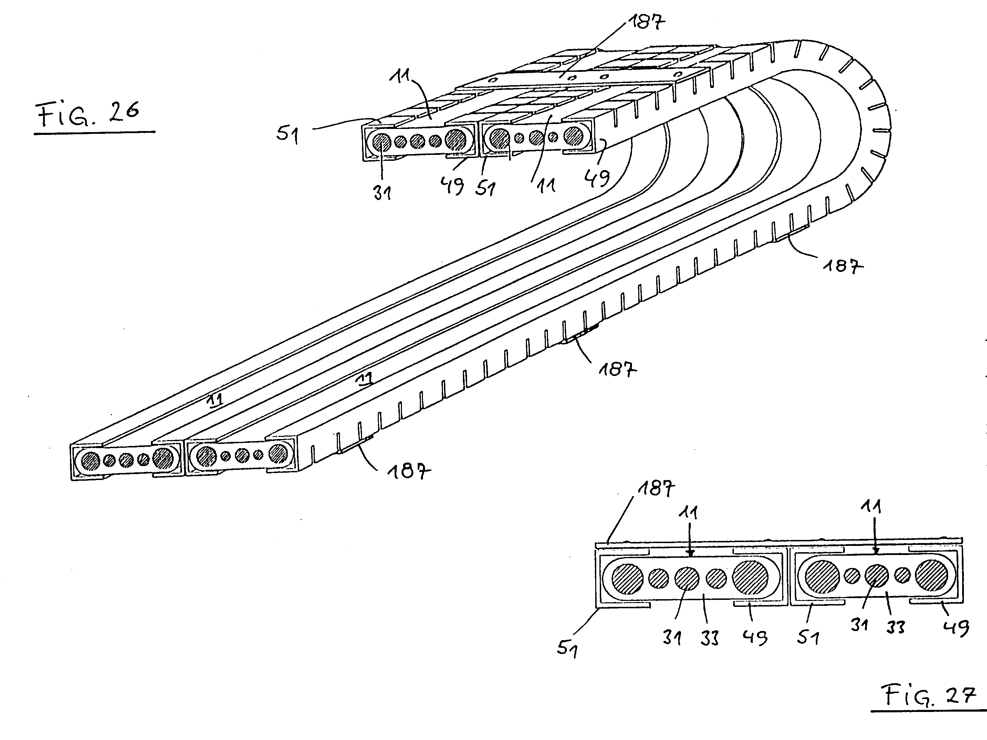

Fig. 23 zeigt in perspektivischer Teildarstellung eine Ausführungsform eines Bandkabels 11, von dessen beiden Längsseitenrändern je eine Vielzahl von in Kabellängsrichtung mit periodischen Abständen voneinander angeordneten Gleitelementen 99 seitlich abstehen. Die Gleitelemente 99 sind in Aufnahmehülsen 101 aufgenommen, die in den Länsseitenbereichen des Kabelmantels 33 festgelegt sind. Im Inneren einer jeden Aufnahmehülse 101 befindet sich eine Druckfeder 103, aufgrund von deren Druckkraft das zugehörigen Gleitelement 99 mit einem Teil seiner Länge aus der Aufnahmehülse 101 vorsteht. Die Gleitelemente 99 sind gegen die Druckkraft der ihnen zugeordneten Druckfedern 103 gegenüber ihren in Fig. 23 gezeigten Positionen weiter in die Aufnahmehülsen 101 hineindrückbar.

Fig. 24 zeigt ein Paar Führungskanäle 105 und 107, in welche die von der in Fig. 23 linken Kabellängsseite abstehenden Gleitelemente 99 eingreifen, um dort geführt zu werden. Und zwar werden die von dem Untertrum 13 abstehenden Gleitelemente 99 in dem in Fig. 24 unteren Führungskanal 105 und die von dem Obertrum 15 abstehenden Gleitelemente 99 in dem in Fig. 24 oberen Führungskanal 107 geführt. Ein gleiches Führungskanalpaar ist auf der in Fig. 23 rechten Seite des Bandkabels 11 angeordnet, jedoch gegenüber der Darstellung in Fig. 24 um die gemeinsame Längsachse um 180° gedreht (nicht dargestellt).

In den Führungskanälen 105 und 107 ist je ein Gleitklotz 108 bzw. 110 in Führungskanallängsrichtung verschiebbar gehalten. Auf den aus den Führungskanälen 105, 107 herausschauenden Oberflächen der Gleitklötze 108, 110 ist ein halbkreisförmiges Bogenkanalstück 112 angeordnet, dessen freie Kanalenden offen sind und über je eine Rampe 114 bzw. 116 mit dem Boden des je zugehörigen Führungskanals 105 bzw. 107 verbunden sind.

Bei der in den Fig. 23 bis 25 gezeigten Ausführungsform wird das Obertrum des Bandkabels 11 nicht auf dem Untertrum 13 abgelegt sondern werden Obertrum 15 und Untertrum 13 mit Hilfe der Gleitelemente 99 und der Führungskanäle 105 und 107 im Abstand voneinander gehalten und geführt. Nimmt man einmal an, daß die mit dem Obertrum 15 des Bandkabels 11 verbundene bewegliche Einrichtung in einer solchen Richtung verfahren wird, daß sich die von der Kabellängsseite des Obertrums 15 abstehenden Gleitelemente 99 in dem oberen Führungskanal 107 zu dem Bogenkanalstück 112 hin bewegen, gelangen die in den Bereich der Schleife 17 kommenden Gleitelemente 99 auf die Rampe 116. Mit Hilfe der Rampe 116 werden diese Gleitelemente 99 entgegen der Kraft ihrer Druckfedern 103 soweit in ihre Aufnahmehülsen 101 hineingedrückt, daß sie in den Führungskanal des Bogenkanalstückes 112 eintreten können. Während des Durchlaufens der Schleife gelangen diese Gleitelemente 99 durch den Kanal des Bogenkanalstücks 112 und bei dessen Verlassen auf die Rampe 114. Während diese Gleitelemente 99 über die Rampe 114 geführt werden, kommen sie aufgrund der Kraft ihrer Druckfedern 103 wieder weiter aus ihren Aufnahmehülsen 101 heraus, bis sie schließlich die Rampe 114 verlassen haben und im Führungskanal 105 geführt sich von der Rampe 114 wegbewegen.

Bei dieser Ausführungsform sind die Führungskanäle 105 und 107 fest angeordnet. Das Mitbewegen des Bereichs der Schleife 17 des Bandkabels 11 mit der Verfahrbewegung der beweglichen Einrichtung wird bei dieser Ausführungsform dadurch ermöglicht, daß die Bogenkanalstücke 112 mit Hilfe der Gleitklötze 108 und 110 in den Führungskanälen 107 und 105 verschiebbar gehalten sind. Diese Verschieblichkeit kann beispielsweise durch Lagerrollen erleichtert werden.

Es besteht die Möglichkeit, mehrere der oben beschriebenen Arten von Gleiteinrichtungen kombiniert zu verwenden. Beispielsweise können das Gleitband 45 in Fig. 4 mit den Gleitrinnen 49,51 in Fig. 6 verwendet werden, möglicherweise durch einstückige Zusammenfassung beider Gleiteinrichtungen. Oder man kann z.B. das Gleitband 45 oder die Gleitbänder 21, 23 mit den Gleitleisten 53, 55 in Fig. 7 kombinieren.

Fig. 26 zeigt ein Beispiel einer aus zwei erfindungsgemäßen Leitungsanordnungen zusammengesetzten Gruppeneinheit. Jede Leitungsanordnung ist durch ein Bandkabel 11 gebildet, dessen beide Längsseitenränder je in eine Gleitrinne 49 bzw. 51 hineinragen. Die beiden benachbarten Gleitrinnen 49 und 51 der beiden Bandkabel 11 liegen Rücken an Rücken aneinander. Auf ihrer gekerbten Oberseite sind die vier Gleitrinnen 49, 51 mit einer Anzahl von in Leitungslängsrichtung angeordneten, quer verlaufenden Befestigungslaschen 187 zusammengehalten. Diese sind durch Verschweißen, Verkleben oder ähnliches mit jeder der vier Gleitrinnen 49, 51 fest verbunden.

Fig. 27 zeigt in vergrößerter Darstellung eine Draufsicht auf ein freies Längsende der Gruppeneinheit nach Fig. 26.

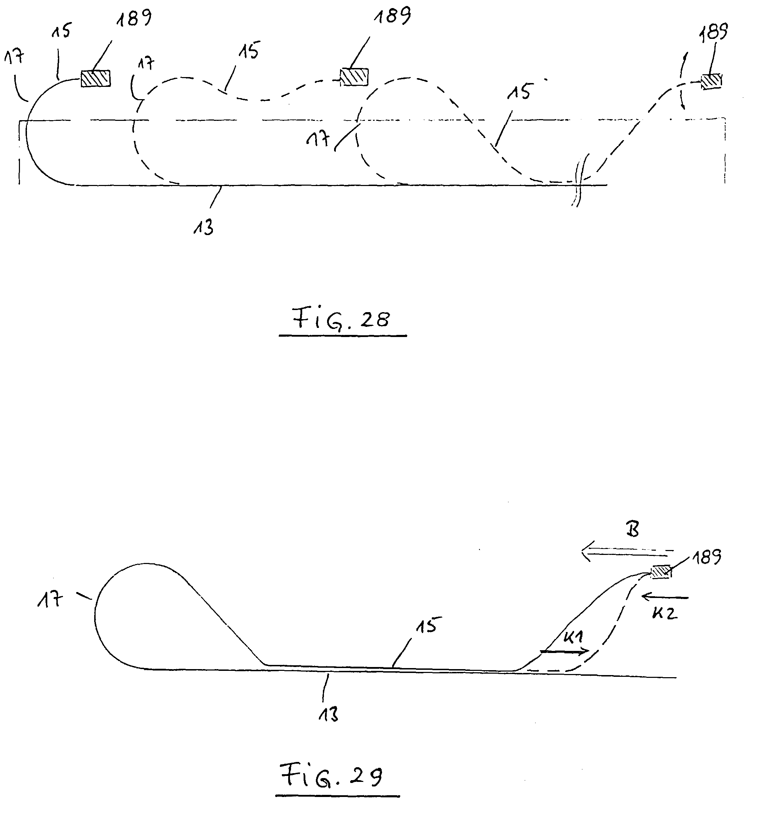

In Fig. 28 sind in schematischer Weise verschiedene Phasen der Wegbewegung einer beweglichen Einrichtung 189 von der Schleife 17 der Leitungsanordnung gezeigt. Je weiter die bewegliche Einrichtung 189 von der Schleife 17 wegbewegt wird, umso tiefer hängt ein mittlerer Bereich des Obertrum 15 in Richtung zum Untertrum 13 durch, bis sich das Obertrum 15 schließlich auf das Untertrum 13 auflegt. Dadurch kommt es im Bereich des Anschlusses der Leitungsanordnung an die bewegliche Einrichtung 189 zu Biegebewegungen der Leitungsanordnung, die zu einer unerwünschten mechanischen Belastung der Leitungsanordnung und von Anschlußelementen der beweglichen Einrichtung 189 führen können.

Fig. 29 zeigt in schematischer Darstellung mechanische Belastungen, die auf den der beweglichen Einrichtung 189 benachbaren Bereich des Obertrums 15 der Leitungsanordnung einwirken können, wenn die bewegliche Einrichtung 189 in Richtung des Bewegungspfeils B in Richtung auf die Schleife 17 bewegt wird. Wie durch einen unteren Kraftpfeil K1 und einen oberen Kraftpfeil K2 angedeutet ist, wirken dabei auf den der beweglichen Einrichtung 189 benachbarten, S-förmigen Bereich des Obertrums 15 gegenläufige Kräfte ein. Diese können dazu führen, daß sich bei schneller Bewegung dieser S-förmige Bereich überschlägt. Dies kann zu starken, unguten mechanischen Belastungen in diesem Bereich des Obertrums 15 führen.

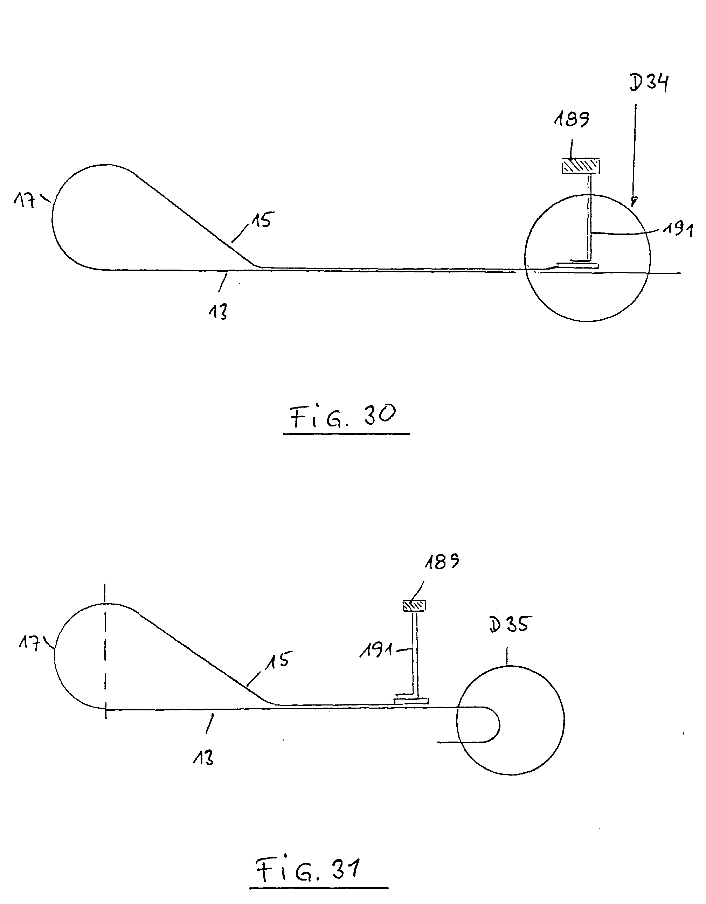

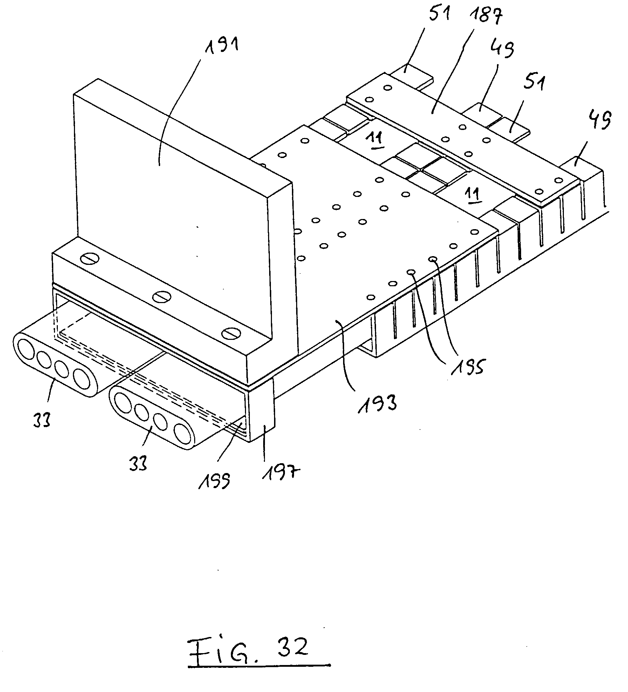

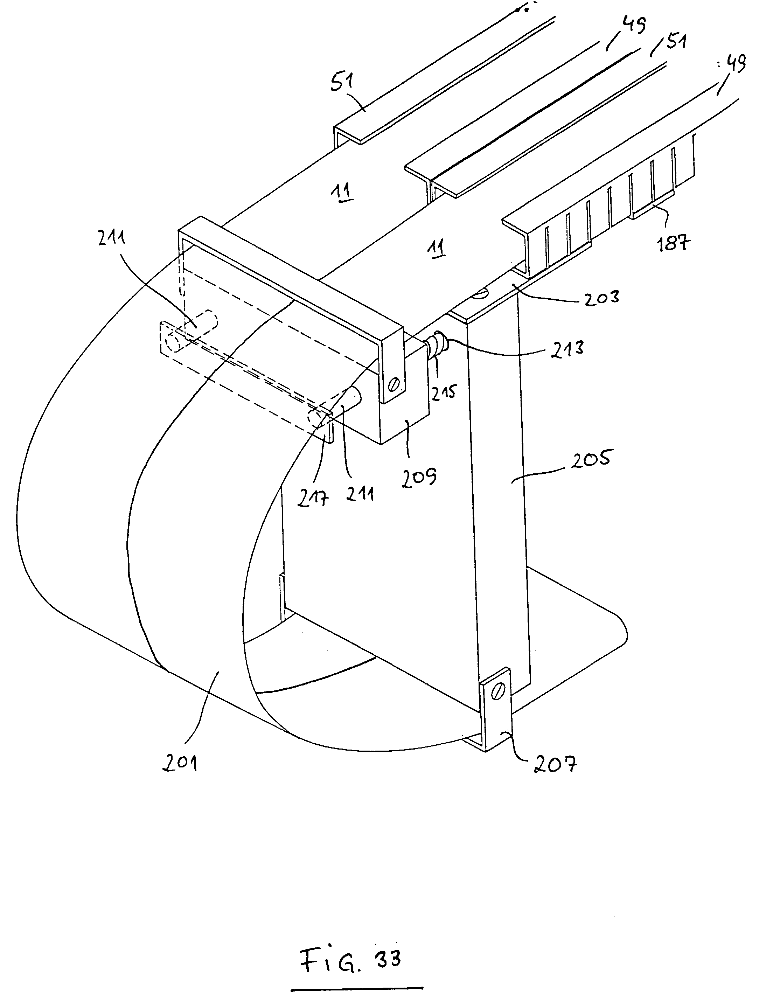

Die Fig. 30 bis 33 zeigen erfindungsgemäße Leitungsanordnungen, bei welchen die im Zusammenhang mit den Fig. 28 und 29 geschilderten Probleme überwunden sind. Dabei zeigen die Fig. 32 und 33 Einzelheiten innerhalb der Detailkreise in den Fig. 30 und 31.

Bei der in Fig. 30 schematisch gezeigten Lösung ist an der beweglichen Einrichtung 189 ein nach unten abstehender Abstandshalter 191 angeordnet, an dessen unterem Ende eine Halterung für das zugehörige freie Obertrumende der Leitungsanordnung befestigt ist. Die Länge des Abstandshalter 191 ist so gewählt, daß das freie Obertrumende immer auf oder dicht über dem Untertrum 13 gehalten wird. Biegebewegungen des an die Halterung angeschlossenen Obertrumendes und ein Überschlagen des Obertrumendes, wie sie im Zusammenhang mit den Fig. 28 und 29 erläutert worden sind, können daher nicht mehr auftreten.

Die in den Fig. 30 und 31 mit dem Detailkreis D34 bzw. D35 schematisch angedeuteten Einrichtungen sind in den Fig. 32 bzw. 33 in größeren Einzelheiten dargestellt.

Fig. 32 zeigt eine Zugentlastungsvorrichtung im Bereich des mit der beweglichen Einrichtung 189 verbundenen Endes des Obertrums 15. Diese Zugentlastungseinrichtung umfaßt eine Halteplatte 193, die mittels Befestigungselementen oder Schweißstellen 195 an den vier Gleitrinnen 49, 51 zweier zu einer Gruppeneinheit zusammengefaßter Bandkabel 11 befestigt ist. Da die Halteplatte 193 nur an den Gleitrinnen 49, 51 befestigt ist, nicht jedoch an den Bandkabeln 11, wirkt sie für die Bandkabel 11 als Zugentlastung. An ihrem über die Enden der Gleitrinnen 49, 51 hinausragenden Ende ist die Halteplatte 193 an dem Abstandshalter 191 befestigt, der anderen Endes an der (in Fig. 32 nicht gezeigten) beweglichen Einrichtung 189 befestigt ist. An dem mit dem Abstandshalter 191 verbundenen Ende der Halteplatte 193 ist außerdem eine Kabelklemme 197 befestigt, mittels welcher die aus den Gleitrinnen 49, 51 herausragenden Bereiche der Bandkabel 11 festgeklemmt sind.

Dies wird beispielsweise dadurch erreicht, daß eine zwischen dem Boden der Kabelklemme 197 und den Bandkabeln 11 befindliche Klemmplatte 199 mittels (in Fig. 32 nicht sichtbarer) Schrauben gegen die Bandkabel 11 drückbar ist.

Die Detaildarstellung in Fig. 33 zeigt das mit der feststehenden Einrichtung verbundene Ende der Leitungsanordnung mit einer Ausgleichsschleife 201 der Leitungsanordnung. An den Enden der Gleitrinnen 49 und 51 zweier zu einer Gruppeneinheit zusammengefaßter Bandkabel 11 ist auch hier eine Zugentlastungsplatte 203 befestigt, deren freies Ende mit einer Abstandsplatte 205 verbunden ist. An deren unterem Ende ist eine untere Leitungsklemme 207 angeordnet, mit deren Hilfe die freien Enden der beiden Bandkabel 11 relativ zur Abstandsplatte 205 festgeklemmt werden können. Am oberen Ende der Abstandsplatte 205 befindet sich eine obere Kabelklemme 209, in welcher die Bandkabel 11 im Bereich ihres Austritts aus den Gleitschienen 49, 51 festgeklemmt werden können. Die obere Kabelklemme 209 weist im Bereich ihrer beiden seitlichen Enden je einen Haltebolzen 211 auf. Die abstandsplattenseitigen Enden der Bolzen 211 sind in je einem Bolzenaufnahmeloch der Abstandsplatte 205 verschiebbar gehalten, wobei auf den Haltebolzen 211 je eine Schraubenfeder 215 sitzt, die sich einen Endes an der oberen Kabelklemme 209 und anderen Endes in dem zugehörigen Bolzenaufnahmeloch 213 abstützt. Die entgegengesetzten Enden der beiden Haltebolzen 211 sind mit einer Montageplatte 217 verbunden, mittels welcher die Haltebolzen 211 unbeweglich gehalten werden. Die Abstandsplatte 205 kann am Leitungsführungskanal 25 festgelegt werden.

Die Ausgleichschleife 201 ermöglicht den Ausgleich von Kabelbewegungen an dem mit der festen Einrichtung verbundenen Ende des Untertrums 13, die beispielsweise dann entstehen, wenn das Kabel nur in die Gleitrinnen oder den Leitungskanal eingelegt ist, ohne mit den Gleitrinnen bzw. dem Leitungskanal fest verbunden zu sein.

## Patentansprüche

1. Leitungsführungsanordnung für die Führung einer eine oder mehrere von einem Kabelmantel (33) umfaßte Leitungen (31) aufweisenden Leitungsanordnung (11) in einem Leitungsführungskanal (25), wobei die Leitungsführungsanordnung ein Untertrum (13) und ein darüber geführtes Obertrum (15) aufweist, die schleifenfönnig (bei 17) ineinander übergehen, wobei ein freies Trumende mit einer feststehenden Einrichtung und ein anderes freies Trumende mit einer in Längsrichtung der Leitungsführungsanordnung hin- und herbeweglichen Einrichtung (bei 17) verbunden sind, **dadurch gekennzeichnet**, daß an dem Außenumfang des Kabelmantels (33) eine in Leitungslängsrichtung wirksame Gleiteinrichtung (21, 23; 45; 49, 51; 53, 55; 61, 63; 69, 71; 89; 99; 169) guter Gleitfähigkeit angeordnet ist, welche eine Reibung zwischen dem Obertrumkabelmantel und dem Untertrumkabelmante1 auch bei großer Leitungslänge verhindert.

2. Leitungsführungsanordnung nach Anspruch 1, **dadurch gekennzeichnet**, daß die Leitungen Teil eines Bandkabels (11) sind.

3. Leitungsführungsanordnung nach Anspruch 1 oder 2, **dadurch gekennzeichnet**, daß die Gleiteinrichtung durch einen den Kabelmantel (33) einhüllenden oder ersetzenden, biegeelastischen Gleitschlauch (47) gebildet ist.

4. Leitungsführungsanordnung nach Anspruch 3, **dadurch gekennzeichnet**, daß der Gleitschlauch (47) aus gleitfähigem Kunststoff besteht, der auf den Kabelmantel (33) aufgeschoben ist.

5. Leitungsführungsanordnung nach einem der Ansprüche 1 oder 2, **dadurch gekennzeichnet**, daß die Gleiteinrichtung mindestens ein auf der Oberseite des Untertrums (13) bzw. auf der Unterseite des Obertrums (15) angeordnetes, biegeelastisches Gleitband (45) aufweist.

6. Leitungsführungsanordnung nach Anspruch 1 oder 2,
**dadurch gekennzeichnet**, daß die Gleiteinrichtung im Bereich der Längsseitenränder des Kabelmantels (33) je eine in Leitungslängsrichtung verlaufende, biegeelastische Gleitschiene (21, 23; 49, 51; 53, 55; 61, 63; 69, 71; 89) aufweist.

7. Leitungsführungsanordnung nach Anspruch 6,
**dadurch gekennzeichnet**, daß die Gleitschiene in Leitungsquerrichtung gesehen beidseits des Kabelmantels (33) je eine am jeweiligen Längsrand angeordnete Gleitleiste (53, 55) aufweist, die in Vertikalrichtung beidseits über die Dicke der Leitungsanordnung einschließlich Kabelmantel (33) hinausragt.

8. Leitungsführungsanordnung nach Anspruch 6 oder 7,
**dadurch gekennzeichnet**, daß die Gleitschiene in Leitungsquerrichtung gesehen beidseits des Kabelmantels (33) je eine Gleitrinne (49, 51; 89) mit zur Leitungsanordnung hin offener Aufnahmerinne für die Aufnahme des zugehörigen Randbereichs der Leitungsanordnung einschließlich Kabelmantel (33) aufweist.

9. Leitungsführungsanordnung nach einem der Ansprüche 1 bis 8,
**dadurch gekennzeichnet**, daß die Gleiteinrichtung an der Oberfläche des Kabelmantels (33) befestigt ist.

10. Leitungsführungsanordnung nach Anspruch 9,
**dadurch gekennzeichnet**, daß die Gleiteinrichtung (21, 23; 45; 49, 51) an in den Kabelmantel (33) eingelassenen Tragstreifen (113) aus dem Material der Gleiteinrichtung festgeschweißt ist.

11. Leitungsführungsanordnung nach Anspruch 8,
**dadurch gekennzeichnet**, daß die beiden Gleitrinnen (49, 51; 89) mit Hilfe einer Vielzahl von in Kabellängsrichtung voneinander beabstandeten Bruckengliedern (109; 119) am Kabelmantel (33) gehalten werden.

12. Leitungsführungsanordnung nach einem der Ansprüche 1 bis 8,
**dadurch gekennzeichnet**, daß die Gleiteinrichtung eine Verankerungseinrichtung (57, 59; 65, 67; 73, 75; 81, 83, 85, 87; 91, 93) aufweist, mittels welcher die Gleiteinrichtung im Kabelmantel (33) verankert ist.

13. Leitungsführungsanordnung nach Anspruch 12,
**dadurch gekennzeichnet**, daß die Verankerungseinrichtung durch Ausnehmungen (115; 137, 139; 145, 147) im Kabelmantel (33) und in die Ausnehmungen formschlüssig eingreifende komplementäre Vorsprünge (117; 133, 135; 141, 143) an der zum Kabelmantel (33) weisenden Seite der Gleiteinrichtung (49, 51) gebildet ist.

14. Leitungsführungsanordnung nach Anspruch 12,
**dadurch gekennzeichnet**, daß die Verankerungseinrichtung durch durchführöffnungen (153, 155) in dem Kabelmantel (33) und damit fluchtende Rastlöcher (149, 151) in der Gleiteinrichtung (49, 51) und durch durch die Rastlöcher (149, 151) und die Durchführöffnungen (153, 155) hindurchragende Verriegelungsstifte (157) gebildet ist.

15. Leitungsführungsanordnung nach Anspruch 12,
**dadurch gekennzeichnet**, daß die Verankerungseinrichtung (57, 59; 65, 67) in den Kabelmantel (33) einextrudiert ist.

16. Leitungsführungsanordnung nach Anspruch 12,
**dadurch gekennzeichnet**, daß in dem Kabelmantel (33) ein Ankergegenstück (81, 83; 93) untergebracht ist, mit dem die Verankerungseinrichtung (73, 75; 91) durch den Kabelmantel (33) hindurch verbunden werden kann.

17. Leitungsführungsanordnung nach Anspruch 16,
**dadurch gekennzeichnet**, daß das Ankergegenstück durch ein parallel zu den Leitungen (31) des Kabels (11) verlaufendes Ankerrohr (93) gebildet ist und daß die Verankerungseinrichtung einen Ankerdübel (91) aufweist, der mit einem Dübelkopf auf der Außenseite der Gleiteinrichtung anliegt und dessen Dübelschaft in dem Ankerrohr (93) festlegbar ist.

18. Leitungsführungsanordnung nach Anspruch 1 oder 2,
**dadurch gekennzeichnet**, daß die Gleiteinrichtung durch ein beidseits über die Längsränder des Kabelmantels (33) überstehendes Gleitband (169) gebildet ist, von dessen beiden über den Kabelmantel (33) hinausragenden Überständen (173, 175) je eine Vielzahl von in Längsrichtung des Bandkabels (11) voneinander beabstandeten Haltestiften (175, 177) über die Kabeldicke hinaus hochsteht, deren freie Enden auf die von dem Gleitband (169) entfernte Flachseite des Kabelmantels (33) gebogen sind.

19. Leitungsführungsanordnung nach einem der Ansprüche 1 bis 18,
**dadurch gekennzeichnet**, daß das Gleitband (21, 23; 45) bzw. die Gleitschiene (49, 51; 53, 55; 61, 63; 69, 71) aus Federstehl gebildet ist.

20. Leitungsführungsanordnung nach einem der Ansprüche 1 bis 18,
**dadurch gekennzeichnet**, daß das Gleitband (21, 23; 45) bzw. die Gleitschiene (49, 51; 53, 55; 61, 63; 69, 71) aus biegeelastischem Kunststoff besteht.

21. Leitungsführungsanordnung nach Anspruch 20,
**dadurch gekennzeichnet**, daß das Kunststoff-Gleitband bzw. die Kunststoff-Gleitschiene eine höhere Steifigkeit aufweist als der Kabelmantel (33).

22. Leitungsführungsanordnung nach einem der Ansprüche 1 bis 21,
**dadurch gekennzeichnet**, daß das Gleitband (21, 23; 45) bzw. die Gleitschiene (49, 51; 53, 55; 61, 63; 69, 71) an beiden Längsenden an der feststehenden bzw. der beweglichen Einrichtung befestigbar ist.

23. Leitungsführungsanordnung nach einem der Ansprüche 6 bis 22,
**dadurch gekennzeichnet**, daß die Gleitschiene (49, 51; 53, 55; 61, 63; 89) bzw. deren Vertikalbereich in Schienenlängsrichtung mit einer Vielzahl vertikal verlaufender, zur Unterseite des Untertrums (13) bzw. zur Oberseite des Obertrums (15) offener Spalten (95) versehen ist, die im Fall der Ausbildung der Gleitschiene als Gleitrinne (49, 51; 89) den unterhalb des Untertrums (13) bzw. oberhalb des Obertrums (15) befindlichen Horizontalbereich der Gleitrinne (49, 51; 89) durchsetzen, damit die Gleitschiene an der Schleifenbiegung (bei 17) der Leitungsanordnung (11) teilnehmen kann.

24. Leitungsführungsanordnung nach einem der Ansprüche 1 bis 23,
**dadurch gekennzeichnet**, daß die Leitungsanordnung in einem Leitungsführungskanal (25) angeordnet ist, der als kastenförmige Führungsrinne mit im wesentlichen der Breite der Leitungsanordnung, einschließlich der Gleiteinrichtung, ausgebildet ist.

25. Leitungsführungsanordnung nach Anspruch 1 oder 2,
**dadurch gekennzeichnet**, daß entlang beider Längsseiten des Kabelmantels (33) je eine Vielzahl von seitlich abstehenden Gleitelementen (99) angeordnet ist,
daß beidseits der Leitungsanordnung je zwei parallel übereinander verlaufende, zur Leitungsanordnung hin seitlich offene Führungskanäle (105, 107) zur Gleitführung der Gleitelemente (99) des Untertrums (13) bzw. des Oberttrums (15) angeordnet sind
und daß jedem Paar parallel übereinander angeordneter Führungskanäle (105, 107) ein beide verbindendes, im wesentlichen halbkreisförmiges Bogenkanalstück (112) für die Aufnahme der jeweils im Schleifenbereich der Leitungsanordnung befindlichen Gleitelemente (99) zugeordnet ist,
wobei das Bogenkanalstück (112) in Längsrichtung der Leitungsanordnung mit dem jeweiligen Ort des Schleifenbereichs der Leitungsanordnung mit bewegbar ist.

26. Leitungsführungsanordnung nach Anspruch 25,
**dadurch gekennzeichnet**, daß das Bogenkanalstück (112) mit dem zugehörigen Führungskanalpaar (105, 107) fest verbunden ist, und daß die beiden Führungskanalpaare entsprechend der Wanderbewegung des jeweiligen Ortes des Schleifenbereichs der Leitungsanordnung bewegbar ist.

27. Leitungsführungsanordnung nach Anspruch 25,
**dadurch gekennzeichnet**, daß die beiden Führungskanalpaare (z. B. 105, 107) ortsfest sind und die beiden Bogenkanalstücke (z. B. 112) entsprechend der Wanderbewegung des jeweiligen Ortes des Schleifenbereichs der Leitungsanordnung relativ zu den Führungskanalpaaren beweglich sind.

28. Leitungsführungsanordnung nach Anspruch 27,
**dadurch gekennzeichnet**, daß in jedem Führungskanal (105, 107) ein darin verschiebbar gehaltener Gleitklotz (108, 110) geführt ist, der eine vertikale Breite aufweist, die mindestens der Tiefe des zugehörigen Führungskanals (105, 107) entspricht,
daß an den freien Seiten der beiden Gleitklötze (108, 110) eines jeden Führungskanalpaares (z. B. 105, 107) je ein offenes Ende des zugehörigen Bogenkanalstückes (112) befestigt ist,
daß die Gleitklötze (108, 110) eine vom zugehörigen offenen Ende des zugehörigen Bogenkanalstückes (112) zum Kanalboden des zugehörigen Führungskanals (105 bzw. 107) führende Rampe (114, 116) aufweisen
und daß jedes Gleitelement (99) gegen den Widerstand einer Druckfeder (103) quer zur Längserstreckungsrichtung der Leitungsanordnung in Richtung zur Leitungsanordnung hin eindrückbar ist, und zwar um einen Betrag, der im wesentlichen der Rampenhöhe entspricht.

29. Leitungsführungsanordnung nach einem der Ansprüche 25 bis 28,
**dadurch gekennzeichnet**, daß die Gleitelemente (99) bzw. die Aufnahmehülsen (101) für die Druckfedern (103) und die eindrückbaren Gleitelemente (99) in den Kabelmantel (33) eingeformt sind.

30. Leitungsführungsanordnung nach einem der Ansprüche 25 bis 28,
**dadurch gekennzeichnet**, daß die Gleitelemente (99) bzw. die Aufnahmehülsen (101) am Kabelmantel (33) durch Kleben, Schweißen, Nieten, Schrauben oder Einextrudieren befestigt sind.

31. Leitungsführungsanordnung nach einem der Ansprüche 1 bis 24,
**dadurch gekennzeichnet,** daß mehrere Leitungsanordnungen zu einer gemeinsamen Gruppeneinheit zusammengefaßt sind, indem die Gleiteinrichtungen (49, 51) der an der Gruppeneinheit beteiligten Leitungsanordnungen aneinander befestigt sind.

32. Leitungsführungsanordnung nach Anspruch 31,
bei Ausbildung der Gleiteinrichtungen als Gleitleisten (53, 55) oder Gleitrinnen (49, 51; 89),
**dadurch gekennzeichnet**, daß die Gleiteinrichtungen der zur Gruppeneinheit zusammengefaßten Leitungsanordnungen auf der die Oberseite des Obertrums (15) bzw. die Unterseite des Untertrums (13) bildenden Seite mittels einer Vielzahl von in Längsrichtung der Leitungsanordnungen voneinander beabstandeten Befestigungslaschen (187) aneinander festgehalten werden.

33. Leitungsführungsanordnung nach einem der Ansprüche 1 bis 32,
wobei sich die vertikale Höhe des Leitungsanschlußbereichs der beweglichen Einrichtung (189) über der vertikalen Höhe des Obertrums befindet, wenn dieses auf dem Untertrum aufliegt, **dadurch gekennzeichnet,** daß an der beweglichen Einrichtung (189) ein Abstandshalter (191) angeordnet ist, an dessen von der beweglichen Einrichtung (189) entferntem Ende das freie Ende des Obertrums (15) befestigt ist und der eine solche vertikale Höhe aufweist, daß das mit der beweglichen Einrichtung (189) mitbewegliche Obertrumende stets auf oder dicht über dem Untertrum (13) geführt wird.

34. Leitungsführungsanordnung nach Anspruch 33,
**dadurch gekennzeichnet**, daß das obertrumseitige Ende des Abstandshalters (191) an einer Zugentlastungseinrichtung (193) montiert ist, die ihrerseits an der Gleiteinrichtung (49, 51) der Leitungsanordnung bzw. den Gleiteinrichtungen (49, 51) der Gruppeneinheit befestigt ist.

35. Leitungsführungsanordnung nach einem der Ansprüche 1 bis 34,
**dadurch gekennzeichnet**, daß an dem mit der feststehenden Einrichtung verbundenen Ende der Leitungsanordnung eine Zugentlastungseinrichtung vorgesehen ist, die eine sich vertikal erstreckende Halteeinrichtung (205) aufweist, an deren einem Vertikalende einerseits das zugehörige freie Ende der Gleiteinrichtung (49, 51) der Leitungsanordnung bzw. der Gleiteinrichtungen (49, 51) der Gruppeneinheit befestigt und andererseits eine gegenüber der Haltevorrichtung (205) federnd beweglich gehaltene Leitungsklemme (209) angeordnet ist und an deren anderem Vertikalende eine feststehende Leitungsklemme (207) vorgesehen ist, und daß derjenige Bereich der Leitungsanordnung bzw. Leitungsanordnungen, der aus dem freien Ende der Gleiteinrichtung (49, 51) bzw. der Gleiteinrichtungen (49, 51) herausragt, zwischen der feststehenden Leitungsklemme (207) und der federnd beweglich gehaltenen Leitungsklemme (209) unter Bildung einer Ausgleichsschleife (201) der Leitungsanordnung dazwischen festgeklemmt ist.

## Claims

1. A line guiding assembly for guiding a line arrangement (11) in a line guiding channel (25), said line arrangement including one or a plurality of lines (31) surrounded by a cable jacket (33), said line guiding assembly comprising a lower length (13) and an upper length (15) guided thereabove, said lengths merging with each other in loop-shaped manner (at 17), with one free length end being connected to a stationary means and another free length end being connected to a means (at 17) reciprocable in the longitudinal direction of the line guiding assembly,
characterized in that the outer periphery of the cable jacket (33) has a slide means (21, 23; 45; 49, 51; 53, 55; 61, 63; 69, 71; 89; 99; 169) of good slidability disposed thereon which acts in the line longitudinal direction and which prevents friction between the upper length cable jacket and the lower length cable jacket also in case of long line lengths.

2. A line guiding assembly according to claim 1,
characterized in that the lines are part of a ribbon cable (11).

3. A line guiding assembly according to claim 1 or 2,
characterized in that the slide means is constituted by a flexurally elastic sliding hose (47) enclosing or replacing the cable jacket (33).

4. A line guiding assembly according to claim 3,
characterized in that the sliding hose (47) consists of slidable plastics material that is slid onto the cable jacket (33).

5. A line guiding assembly according to any one of claims 1 or 2,
characterized in that the slide means comprises at least one flexurally elastic sliding band (45) disposed on the upper side of the lower length (13) or on the lower side of the upper length (15), respectively.

6. A line guiding assembly according to claim 1 or 2,
characterized in that the slide means, in the region of the longitudinal lateral edges of the cable jacket (33), comprises one flexurally elastic slide rail (21, 23; 49, 51; 53, 55; 61, 63; 69, 71; 89) each extending in the line longitudinal direction.

7. A line guiding assembly according to claim 6,
characterized in that the slide rail, as seen in line transverse direction, comprises on both sides of the cable jacket (33) one slide web (53, 55) each disposed on the respective longitudinal edge and projecting, in vertical direction, on both sides beyond the thickness of the line arrangement inclusive of the cable jacket (33).

8. A line guiding assembly according to claim 6 or 7,
characterized in that the slide rail, as seen in line transverse direction, comprises on both sides of the cable jacket (33) one slide groove (49, 51; 89) each, having a receiving groove open towards the line arrangement for receiving the associated edge portion of the line arrangement inclusive of the cable jacket (33).

9. A line guiding assembly according to any one of claims 1 to 8,
characterized in that the slide means is attached to the surface of the cable jacket (33).

10. A line guiding assembly according to claim 9,
characterized in that the slide means (21, 23, 45; 49, 51) is welded to supporting strips (113) embedded in the cable jacket (33) and consisting of the material of the slide means.

11. A line guiding assembly according to claim 8,
characterized in that the two slide grooves (49, 51; 89) are held to the cable jacket (33) by means of a multiplicity of bridging members (109; 119) spaced apart in the longitudinal direction of the cable.

12. A line guiding assembly according to any one of claims 1 to 8,
characterized in that the slide means comprises an anchoring means (57, 59; 65, 67; 73, 75; 81, 83, 85, 87; 91, 93) by means of which the slide means is anchored in the cable jacket (33).

13. A line guiding assembly according to claim 12,
characterized in that the anchoring means is constituted by recesses (115; 137, 139; 145, 147) in the cable jacket (33) and by complementary projections (117; 133, 135; 141, 143) formed on the side of the slide means (49, 51) directed towards the cable jacket (33), and positively engaging in said recesses.

14. A line guiding assembly according to claim 12,
characterized in that the anchoring means is constituted by through-openings (153, 155) in the cable jacket (33) and aligned latching holes (149, 151) in the slide means (49, 51) as well as by locking pins (157) projecting through the latching holes (149, 151) and the through-openings (153, 155).

15. A line guiding assembly according to claim 12,
characterized in that the anchoring means (57, 59; 65, 67) is integrally extruded in the cable jacket (33).

16. A line guiding assembly according to claim 12,
characterized in that an anchoring counterpiece (81, 83; 93) is accommodated in the cable jacket (33) and is adapted to have the anchoring means (73, 75; 91) connected thereto through the cable jacket (33).

17. A line guiding assembly according to claim 16,
characterized in that the anchoring counterpiece is constituted by an anchoring tube (93) extending parallel to the lines (31) of the cable (11), and in that the anchoring means comprises an anchoring dowel (91) having a dowel head abutting the outside of the slide means and the dowel shaft thereof being adapted to be fixed in the anchoring tube (93).

18. A line guiding assembly according to claim 1 or 2,
characterized in that the slide means is constituted by a sliding band (169) projecting on both sides beyond the longitudinal edges of the cable jacket (33), the two projecting lengths (173, 175) thereof, which project beyond the cable jacket (33), each having a multiplicity of holding pins upstanding therefrom beyond the cable thickness while being spaced apart in the longitudinal direction of the ribbon cable (11), with the free ends thereof being bent onto the face side of the cable jacket (33) remote from the sliding band (169).

19. A line guiding assembly according to any one of claims 1 to 18,
characterized in that the sliding band (21, 23; 45) or the slide rail (49, 51; 53, 55; 61, 63; 69, 71), respectively, is made of spring steel.

20. A line guiding assembly according to any one of claims 1 to 18,
characterized in that the sliding band (21, 23; 45) or the slide rail (49, 51; 53, 55; 61, 63; 69, 71), respectively, is made of flexurally elastic plastics material.

21. A line guiding assembly according to claim 20,
characterized in that the plastics sliding band or the plastics slide rail, respectively, is of higher stiffness than the cable jacket (23).

22. A line guiding assembly according to any one of claims 1 to 21,
characterized in that the sliding band (21, 23; 45) or the slide rail (49, 51; 53, 55; 61, 63; 69, 71), respectively, is adapted to be mounted, at both longitudinal ends thereof, to the stationary means and to the movable means, respectively.

23. A line guiding assembly according to any one of claims 6 to 22,
characterized in that the slide rail (49, 51; 53, 55; 61, 63; 89) or the vertical portion thereof in the rail longitudinal direction is provided with a multiplicity of vertically extending gaps (95) open towards the bottom side of the lower length (13) and towards the top side of the upper length (15), respectively, said gaps, in case the slide rail is in the form of a slide groove (49, 51; 89), extending through the horizontal portion of the slide groove (49, 51; 89) located underneath the lower length (13) and above the upper length (15), respectively, so that the slide rail is adapted to participate in the loop bend (at 17) of the line arrangement (11).

24. A line guiding assembly according to any one of claims 1 to 23,
characterized in that the line arrangement is disposed in a line guiding channel (25) which is in the form of a box-shaped guiding groove having substantially the width of the line arrangement, inclusive of the slide means.

25. A line guiding assembly according to claim 1 or 2,
characterized in that a multiplicity of laterally projecting sliding members (99) is disposed along both longitudinal sides of the cable jacket (33), that two guiding channels (105, 107) each, which extend in parallel manner above each other and are laterally open towards the line arrangement and serve for slidably guiding the sliding members (99) of the lower length (13) and upper length (15), respectively, are disposed on both sides of the line arrangement,
and that each pair of guiding channels (105, 107) disposed above each other in parallel manner has associated therewith an arcuate channel piece (112) having a substantially semi-circular configuration and connecting said two channels to each other and serving for receipt of the respective sliding members (99) located in the loop portion of the line arrangement,
said arcuate channel piece (112) being movable along with the particular location of the loop portion of the line arrangement in the longitudinal direction of the line arrangement.

26. A line guiding assembly according to claim 25,
characterized in that the arcuate channel piece (112) is fixedly connected to the associated guiding channel pair (105, 107), and in that the two guiding channel pairs are movable in accordance with the travelling motion of the particular location of the loop portion of the line arrangement.

27. A line guiding assembly according to claim 25,
characterized in that the two guiding channel pairs (e.g. 105, 107) are stationary and the two arcuate channel pieces (e.g. 112) are movable in accordance with the travelling motion of the respective location of the loop portion of the line arrangement relative to the guiding channel pairs.

28. A line guiding assembly according to claim 27,
characterized in that each guiding channel (105, 107) guides therein a slide block (108, 110) which is slidably held therein and which has a vertical width corresponding at least to the depth of the associated guiding channel (105, 107),
that the free sides of the two slide blocks (108, 110) of each guiding channel pair (e.g. 105, 107) each have an open end of the associated arcuate channel piece (112) secured thereto,
that the slide blocks (108, 110) have a ramp extending from the associated open end of the associated arcuate channel piece (112) to the channel floor of the associated guiding channel (105 and 107, respectively),
and in that each sliding member (99), against the resistance of a pressure spring (103), is adapted to be pushed inwardly transversely of the longitudinal direction of the line arrangement, in the direction towards the line arrangement, by an amount corresponding substantially to the ramp height.

29. A line guiding assembly according to any one of claims 25 to 28,
characterized in that the sliding members (99) or the receiving sleeves (110) for the pressure springs (103), respectively, as well as the pushable sliding members (99) are moulded into the cable jacket (33).

30. A line guiding assembly according to any one of claims 25 to 28,
characterized in that the sliding members (99) or the receiving sleeves (101), respectively, are attached to the cable jacket (33) adhesively, by welding, riveting, threaded connection or extrusion.

31. A line guiding assembly according to any one of claims 1 to 24,
characterized in that a plurality of line arrangements is combined to form a common group unit by attaching the slide means (49, 51) of the line arrangements participating in the group unit to each other.

32. A line guiding assembly according to claim 31,
in which the slide means are in the form of slide rails (53, 55) or slide grooves (49, 51; 89),
characterized in that the slide means of the line arrangements combined to form the group unit are retained on the side forming the upper side of the upper length (15) or the lower side of the lower length (13) by means of a multiplicity of mounting lugs (187) spaced apart in the longitudinal direction of the line arrangements.

33. A line guiding assembly according to any one of claims 1 to 32, in which the vertical height of the line terminating portion of the movable means (189) is above the vertical height of the upper length when the latter abuts on the lower length,
characterized in that the movable means (189) has a spacer (191) disposed thereon whose end remote from the movable means (189) has the free end of the upper length (15) mounted thereto and which is of such vertical height that the upper length end movable concomitantly with the movable means (189) is always guided on or closely above the upper length (13).

34. A line guiding assembly according to claim 33,
characterized in that the end of the spacer (191) located on the side of the upper length is mounted to a strain relief means (193) which in turn is secured to the slide means (49, 51) of the line arrangement or to the slide means (49, 51) of the group unit, respectively.

35. A line guiding assembly according to any one of claims 1 to 34,
characterized in that the end of the line arrangement connected to the stationary means has a strain relief means provided thereon which has a vertically extending holding means (205), the one vertical end thereof having attached thereto, on the one hand, the associated free end of the slide means (49, 51) of the line arrangement or of the slide means (49, 51) of the group unit, respectively, and on the other hand, a line clamp (209) held in resiliently movable manner with respect to the holding means (205), and the other vertical end thereof having attached thereto a stationary line clamp (207), and in that the portion of the line arrangement or arrangements which projects from the free end of the respective slide means (49, 51) is clamped between the stationary line clamp (207) and the line clamp (209) held in resiliently movable manner, such that a balancing loop (201) is formed therebetween.

## Revendications

1. Dispositif de guidage de conducteurs pour le guidage d'un dispositif de conducteurs (11) comportant un ou plusieurs conducteurs (31) enveloppés par une gaine de câble (33), dans un canal (25) de guidage des conducteurs, dans lequel le dispositif de guidage de conducteurs comporte un brin inférieur (13) et un brin supérieur (15) s'étendant au-dessus du précédent, ces brins supérieur et inférieur se réunissant selon une disposition en boucle (en 17), une extrémité libre d'un brin étant reliée à un dispositif fixe et une autre extrémité libre d'un brin étant reliée à un dispositif (en 17) déplaçable en va-et-vient dans la direction longitudinale du dispositif de guidage de conducteurs, caractérisé en ce que sur la périphérie extérieure de la gaine de câble (33) est disposé un dispositif de glissement (21,23; 45;49,51; 53,55; 61,63;69,71; 89; 99; 169) qui agit dans la direction longitudinale des conducteurs et possède une bonne capacité de glissement et qui empêche un frottement entre la gaine de câble du brin supérieur et la gaine de câble du brin inférieur, également dans le cas d'une grande longueur de conducteurs.

2. Dispositif de guidage de conducteurs selon la revendication 1, caractérisé en ce que les conducteurs font partie d'un câble plat (11).

3. Dispositif de guidage de conducteurs selon la revendication 1 ou 2, caractérisé en ce que le dispositif de glissement est formé par un tuyau coulissant élastique flexible (47) qui enveloppe ou remplace la gaine de câble (33).

4. Dispositif de guidage de conducteurs selon la revendication 3, caractérisé en ce que le tuyau coulissant (47) est formé d'une matière plastique ayant une propriété de glissement et qui est emmanché sur la gaine de câble (33).

5. Dispositif de guidage de conducteurs selon l'une des revendications 1 ou 2, caractérisé en ce que le dispositif de glissement comporte au moins une bande de glissement élastique et flexible (45) disposée sur la face supérieure du brin inférieur (13) et sur la face inférieure du brin supérieur (15).

6. Dispositif de guidage de conducteurs selon la revendication 1 ou 2, caractérisé en ce que le dispositif de glissement possède, dans la zone des bords latéraux ou longitudinaux de la gaine de câble (33), des glissières respectives élastiques et flexibles (21,23; 49,51; 53; 55; 61,63; 69,71; 89), qui s'étendent dans la direction longitudinale des conducteurs.

7. Dispositif de guidage de conducteurs selon la revendication 6, caractérisé en ce que, lorsqu'on regarde dans la direction transversale des conducteurs, la glissière possède, des deux côtés de la gaine de câble (33), des barrettes de glissement respectives (53,55), disposées sur le bord longitudinal respectif et qui font saillie des deux côtés, dans la direction verticale, au-delà de l'épaisseur du dispositif de conducteurs y compris la gaine de câble (33).

8. Dispositif de guidage de conducteurs selon la revendication 6 ou 7, caractérisé en ce que, lorsqu'on regarde dans la direction transversale des conducteurs, la glissière possède des deux côtés de la gaine de câble (33), des goulottes respectives de glissement (49,51; 89), avec une rainure de logement ouverte en direction du dispositif de conducteurs et servant à loger le bord marginal associé du dispositif de conducteurs y compris la gaine de câble (33).

9. Dispositif de guidage de conducteurs selon l'une des revendications 1 à 8, caractérisé en ce que le dispositif de glissement est fixé sur la surface de la gaine de câble (33).

10. Dispositif de guidage de conducteurs selon la revendication 9, caractérisé en ce que le dispositif de glissement (21,23; 45; 49,51) est fixé par soudage sur des bandes de support (113) insérées dans la gaine de câble (33) et réalisées avec le matériau du dispositif de glissement.

11. Dispositif de guidage de conducteurs selon la revendication 8, caractérisé en ce que les deux rainures de glissement (49,51; 89) sont retenues sur la gaine de câble (33) à l'aide d'une multiplicité d'éléments en forme de ponts (109; 119) distants les uns des autres dans la direction longitudinale du câble.

12. Dispositif de guidage de conducteurs selon l'une des revendications 1 à 8, caractérisé en ce que le dispositif de glissement comporte un dispositif d'ancrage (57,59; 65,67; 73,75; 81, 83, 85, 87; 91, 93), à l'aide duquel le dispositif de glissement est ancré dans la gaine de câble (33).

13. Dispositif de guidage de conducteurs selon la revendication 12, caractérisé en ce que le dispositif d'ancrage est formé par des évidements (115; 137,139; 145,147) situés dans la gaine de câble (33) et par des parties saillantes complémentaires (117; 133,135; 141,143), qui s'engagent dans les évidements selon une liaison par formes complémentaires et sont formés sur la face du dispositif de glissement (49,51), qui est tourné vers la gaine de câble (33).

14. Dispositif de guidage de conducteurs selon la revendication 12, caractérisé en ce que le dispositif d'ancrage est formé par des ouvertures de passage (153,155) formées dans la gaine de câble (33) et par des trous d'encliquetage (149,151) alignés avec ces ouvertures et formés dans le dispositif de glissement (49,51), et par des tiges de verrouillage (157) qui traversent les trous d'encliquetage (149,151) et les ouvertures de passage (153,155).

15. Dispositif de guidage de conducteurs selon la revendication 12, caractérisé en ce que le dispositif d'ancrage (57,59; 65,67) est inséré par extrusion dans la gaine de câble (33).

16. Dispositif de guidage de conducteurs selon la revendication 12, caractérisé en ce que dans la gaine de câble (33) est logé un élément antagoniste d'ancrage (81,83; 93), auquel le dispositif d'ancrage (73,75; 91) peut être relié à travers la gaine de câble (33).

17. Dispositif de guidage de conducteurs selon la revendication 16, caractérisé en ce que l'élément antagoniste d'ancrage est formé par un tube d'ancrage (93) qui s'étend parallèlement aux conducteurs (31) du câble (11) et que le dispositif d'ancrage possède une cheville d'ancrage (91) qui s'applique, par une tête, contre la face extérieure du dispositif de glissement et dont la tige peut être fixée dans le tube d'ancrage (93).

18. Dispositif de guidage de conducteurs selon la revendication 1 ou 2, caractérisé en ce que le dispositif de glissement est formé par une bande de glissement (169) qui fait saillie des deux côtés au-delà des bords longitudinaux de la gaine de câble (33) et qu'à partir des deux parties en débordement (173,175) de ces bandes de glissement, qui font saillie au-delà de la gaine de câble (33), des multiplicités respectives de tiges de retenue (175,177), qui sont distantes les unes des autres dans la direction longitudinale du câble plat (11), s'élèvent au-delà de l'épaisseur du câble, les extrémités libres de ces tiges de retenue étant repliées sur le côté plat, éloigné de la bande de glissement (169), de la gaine de câble (33).

19. Dispositif de guidage de conducteurs selon l'une des revendications 1 à 18, caractérisé en ce que la bande de glissement (21,23; 45) ou la glissière (49,51; 53,55; 61,63; 69,71) est formée d'un acier pour ressorts.

20. Dispositif de guidage de conducteurs selon l'une des revendications 1 à 18, caractérisé en ce que la bande de glissement (21,23; 45) ou la glissière (49,51; 53,55; 61,63; 69,71) est formée d'une matière élastique et flexible.

21. Dispositif de guidage de conducteurs selon la revendication 20, caractérisé en ce que la bande de glissement en matière plastique ou la glissière en matière plastique possède une rigidité supérieure à celle de la gaine de câble (33).

22. Dispositif de guidage de conducteurs selon l'une des revendications 1 à 21, caractérisé en ce que la bande de glissement (21,23; 45) ou la glissière (49,51; 53,55; 61,63; 69,71) peut être fixée au niveau de ses deux extrémités longitudinales, sur le dispositif fixe ou sur le dispositif mobile.

23. Dispositif de guidage de conducteurs selon l'une des revendications 6 à 22, caractérisé en ce que la glissière (49,51; 53,55; 61,63; 89) ou sa partie verticale est pourvue de fentes verticales (95), qui s'ouvrent en direction de la face inférieure du brin inférieur (13) ou en direction de la face supérieure du brin supérieur (15) et qui, dans le cas de l'agencement de la glissière sous la forme d'une rainure de glissement (49,51; 89), traversent la partie horizontale, située au-dessous du brin inférieur (13) ou au-dessus du brin supérieur (15) de la rainure de glissement (49,51; 89), afin que la glissière puisse participer au coudage en forme de boucle (en 17) du dispositif de conducteurs (11).

24. Dispositif de guidage de conducteurs selon l'une des revendications 1 à 23, caractérisé en ce que le dispositif de conducteurs est disposé dans un canal (25) de guidage de conducteurs, qui est agencé à la manière d'une goulotte de guidage en forme de boîte possédant essentiellement la largeur du dispositif de conducteurs, y compris le dispositif de glissement.

25. Dispositif de guidage de conducteurs selon la revendication 1 ou 2, caractérisé en ce
que des multiplicités respectives d'éléments coulissants (99) qui font saillie latéralement sont disposés le long des deux côtés longitudinaux de la gaine de câble (33), que deux canaux respectifs de guidage (105,107), qui sont superposés et parallèles et sont ouverts latéralement en direction du dispositif de conducteurs et servent à réaliser le guidage avec glissement des éléments coulissants (99) du brin inférieur (13) et du brin supérieur (15) sont disposés des deux côtés du dispositif de conducteurs, et
qu'à chaque couple de canaux de guidage superposés et parallèles (105,107) est associé un élément de canal coudé (112) qui relie ces deux canaux, possède une forme essentiellement semicirculaire et sert à recevoir les éléments coulissants (99) situés respectivement dans la zone de la boucle du dispositif du conducteurs,
l'élément de canal coudé (112) étant déplaçable dans la direction longitudinale du dispositif de conducteurs conjointement avec l'emplacement respectif de la zone de la boucle du dispositif de conducteurs.

26. Dispositif de guidage de conducteurs selon la revendication 25, caractérisé en ce que l'élément de canal coudé (112) est relié de façon fixe au couple associé de canaux de guidage (105,107) et que les deux couples de canaux de guidage peuvent être déplacés en fonction du mouvement de cheminement de l'emplacement respectif de la zone de la boucle du dispositif de conducteurs.

27. Dispositif de guidage de conducteurs selon la revendication 25, caractérisé en ce que les deux couples de canaux de guidage (par exemple 105,107) sont fixes et que les deux éléments de canal coudés (par exemple (112) sont déplaçables en fonction du mouvement de cheminement de l'emplacement respectif de la zone de la boucle du dispositif de conducteurs par rapport aux couples de canaux de guidage.

28. Dispositif de guidage de conducteurs selon la revendication 27, caractérisé en ce que dans chaque canal de guidage (105,107) est inséré un sabot coulissant (108,110) retenu de manière à être déplaçable dans le canal et qui possède dans le sens vertical une largeur, qui correspond au moins à la profondeur du canal associé de guidage (105,107),
que sur les côtés libres des deux sabots coulissants (108,110) de chaque couple de canaux de guidage (par exemple 105,107) est fixée respectivement une extrémité ouverte de l'élément associé de canal coudé (112),
que les sabots coulissants (108,110) possèdent une rampe (114,116), qui s'étend depuis l'extrémité ouverte associée de l'élément de canal coudé associé (112) jusqu'au fond du canal de guidage associé (105 ou 107), et
que chaque élément coulissant (99) peut être repoussé, à l'encontre de la résistance d'un ressort de pression (103) transversalement par rapport à la direction longitudinale au dispositif de conducteurs, en direction de ce dispositif, et ce sur une distance qui correspond essentiellement à la hauteur de la rampe.

29. Dispositif de guidage de conducteurs selon l'une des revendications 25 à 28, caractérisé en ce que les éléments coulissants (99) ou les douilles de logement (101) pour les ressorts de pression (103) et les éléments coulissants (99), qui peuvent être enfoncés, sont formés dans la gaine de câble (33).

30. Dispositif de guidage de conducteurs selon l'une des revendications 25 à 28, caractérisé en ce que les éléments coulissants (99) ou les douilles de logement (101) sont fixées sur le câble plat (33) par collage, soudage, rivetage, vissage ou insertion par extrusion.

31. Dispositif de guidage de conducteurs selon l'une des revendications 1 à 24, caractérisé en ce que plusieurs dispositifs de conducteurs sont réunis pour former une unité commune de groupe, par le fait que les dispositifs de glissement (49,51) des dispositifs de conducteurs présents dans l'unité de groupe, sont fixés les uns aux autres.

32. Dispositif de guidage de conducteurs selon la revendication 31,
dans le cas de l'agencement des dispositifs de glissement sous la forme de barrettes de glissement (53,55) ou de goulottes de glissement (49,51; 89),
caractérisé en ce que les dispositifs de glissement des dispositifs de conducteurs réunis dans l'unité de groupe, sont fixés entre eux, sur le côté formant la face supérieure du brin supérieur (15) ou la face inférieure du brin inférieur (13), à l'aide d'une multiplicité de pattes de fixation (187) qui sont distantes les unes des autres dans la direction longitudinale des dispositifs de conducteurs.

33. Dispositif de guidage de conducteurs selon l'une des revendications 1 à 32, caractérisé en ce que la hauteur verticale de la zone de raccordement de conducteurs du dispositif mobile (189) se situe au-dessus de la hauteur verticale du brin supérieur, lorsque ce dernier s'applique sur le brin inférieur, caractérisé en ce que sur le dispositif mobile (189) est disposée une entretoise (191), que l'extrémité libre du brin supérieur (15) est fixée à l'extrémité de cette entretoise, qui est éloignée du dispositif mobile (189) et, possède une hauteur verticale telle que l'extrémité du brin supérieur, qui est déplacée conjointement avec le dispositif mobile (189), est guidée en permanence sur ou juste au-dessus du brin inférieur (13).

34. Dispositif de guidage de conducteurs selon la revendication 33, caractérisé en ce que l'extrémité, située du côté du brin supérieur, de l'entretoise (191) est montée sur un dispositif de détente de contrainte de traction (193), qui pour sa part est fixé sur le dispositif de glissement (49,51) du dispositif de conducteurs ou des dispositifs de glissement (49,51) de l'unité de groupe.

35. Dispositif de guidage de conducteurs selon l'une des revendications 1 à 34, caractérisé en ce que sur l'extrémité du dispositif de conducteurs, qui est reliée au dispositif fixe, est prévu un dispositif de détente de contrainte de traction, qui possède un dispositif de retenue (205) qui s'étend verticalement et sur une extrémité verticale duquel d'une part est fixée l'extrémité libre associée du dispositif de glissement (49,51) du dispositif de conducteurs ou des dispositifs de glissement (49,51) de l'unité de groupe et d'autre part est disposé un serre - conducteur (209) retenu de manière à être mobile élastiquement par rapport au dispositif de retenue (205) et sur l'autre extrémité verticale duquel est prévu un serre - conducteur fixe (207), et que la partie du ou des dispositifs de conducteurs, qui fait saillie hors de l'extrémité libre du Dispositif de glissement (49,51) ou des dispositifs de glissement (49,51), est bloquée fermement par serrage entre le serre-conducteur fixe (207) et le serre - conducteur (209) retenu de manière à être déplaçable élastiquement, avec formation d'une boucle de compensation (201) du dispositif de conducteur entre ces serre - conducteurs.
